(19) 

**Europäisches Patentamt**
**European Patent Office**
**Office européen des brevets**

(11) **EP 4 652 509 B1**

(12) **EUROPEAN PATENT SPECIFICATION**

(45) Date of publication and mention
of the grant of the patent:
**18.02.2026 Bulletin 2026/08**

(51) International Patent Classification (IPC):
**G05D 1/246** *(2024.01)*    **G05D 1/467** *(2024.01)*
**G05D 1/606** *(2024.01)*    **G05D 1/644** *(2024.01)*

(21) Application number: **24821608.7**

(52) Cooperative Patent Classification (CPC):
**G05D 1/644; G05D 1/2465; G05D 1/467;**
**G05D 1/606;** G05D 2105/89; G05D 2109/254

(22) Date of filing: **08.11.2024**

(86) International application number:
**PCT/JP2024/080196**

(87) International publication number:
**WO 2025/182289 (04.09.2025 Gazette 2025/36)**

(54) **MOTION PLANNING AND CONTROL WITH MULTI-STAGE CONSTRUCTION OF INVARIANT SETS**

BEWEGUNGSPLANUNG UND -STEUERUNG MIT MEHRSTUFIGER KONSTRUKTION INVARIANTER SÄTZE

PLANIFICATION ET COMMANDE DE MOUVEMENT AVEC CONSTRUCTION À ÉTAGES MULTIPLES D'ENSEMBLES INVARIANTS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.02.2024 US 202418589946**

(43) Date of publication of application:
**26.11.2025 Bulletin 2025/48**

(73) Proprietor: **MITSUBISHI ELECTRIC CORPORATION**
**Chiyoda-ku, Tokyo, 1008310 (JP)**

(72) Inventors:
• GREIFF, Marcus
  **Cambridge, MA 02129-1955 (US)**
• DI CAIRANO, Stefano
  **Cambridge, MA 02129-1955 (US)**
• SINHMAR, Himani
  **Cambridge, MA 02129-1955 (US)**

(74) Representative: **Pfenning, Meinig & Partner mbB**
**Patent- und Rechtsanwälte**
**An der Frauenkirche 20**
**01067 Dresden (DE)**

(56) References cited:
• **DANIELSON CLAUS ET AL: "Robust Motion Planning for Uncertain Systems With Disturbances Using the Invariant-Set Motion Planner", IEEE TRANSACTIONS ON AUTOMATIC CONTROL, IEEE, USA, vol. 65, no. 10, 9 July 2020 (2020-07-09), pages 4456 - 4463, XP011811517, ISSN: 0018-9286, [retrieved on 20200924], DOI: 10.1109/TAC.2020.3008126**
• **SCORDAMAGLIA VALERIO ET AL: "A Set-Based Trajectory Planning Algorithm for a Network Controlled Skid-Steered Tracked Mobile Robot Subject to Skid and Slip Phenomena", JOURNAL OF INTELLIGENT, vol. 101, no. 1, 20 March 2020 (2020-03-20), XP037315951, ISSN: 0921-0296, DOI: 10.1007/S10846-020-01267-0**
• **YUWEI WU ET AL: "External Forces Resilient Safe Motion Planning for Quadrotor", ARXIV.ORG, CORNELL UNIVERSITY LIBRARY, 201 OLIN LIBRARY CORNELL UNIVERSITY ITHACA, NY 14853, 29 September 2021 (2021-09-29), XP091047563**

EP 4 652 509 B1

**(Cont. next page)**

- **WABERSICH KIM P ET AL: "Data-Driven Safety Filters: Hamilton-Jacobi Reachability, Control Barrier Functions, and Predictive Methods for Uncertain Systems", IEEE CONTROL SYSTEMS, IEEE, USA, vol. 43, no. 5, 1 October 2023 (2023-10-01), pages 137 - 177, XP011950119, ISSN: 1066-033X, [retrieved on 20230929], DOI: 10.1109/MCS.2023.3291885**

**Description**

[Technical Field]

This invention relates to path planning and control of vehicles subject to disturbances and modeling errors, and more particularly to how such motion plans can be determined by computing robust invariant sets and how these sets can be used to modify an unsafe reference trajectory to become safe.

[Background Art]

Path planning includes computing feasible motions that move a vehicle from one state (position, velocity, rotation etc.) in some initial set to another state in some terminal set. This is often combined with constraints to ensure safety, and formulated as an optimization problem wherein quantities such as time and fuel consumption are minimized. However, there are several domain-specific disturbances that affect the accuracy of such motion plans, and knowledge of these may improve performance at the cost of increasing the computational burden of the planner. However, even if the disturbances are estimated, all possible realizations of modeling errors and misspecifications of the disturbances need to be considered to formally guarantee operational safety of the vehicle.

An example can be found in DANIELSON CLAUS ET AL: "Robust Motion Planning for Uncertain Systems With Disturbances Using the Invariant-Set Motion Planner", IEEE TRANSACTIONS ON AUTOMATIC CONTROL, IEEE, USA, vol. 65, no. 10, 9 July 2020, pages 4456-4463, XP011811517, ISSN: 0018-9286, DOI: 10.1109/TAC.2020.3008126, which discloses an extension to the invariant-set motion planner to systems with persistently varying disturbances and parametric model uncertainty. This is accomplished by replacing the previously used positive invariant sets with robust positive invariant sets.

When operating vehicles such as unmanned aerial vehicles (UAVs), several disturbances affect the accuracy of maneuvers, the overall cost of a mission, and its safety. As used herein, safety means the ability to control the vehicles in a manner satisfying the constraints in the presence of the disturbances. Some such disturbances can be assumed to be partially known and incorporated in the motion planning of the UAV to aid its mission. The disturbances can come from unmodelled dynamics, poorly estimated motion parameters, such as mass and inertia, estimation errors, and exogenous forces such as those induced by wind.

Several planning methods are known to rely on the mathematical properties of the differential equations that govern the motions of the vehicle by computing smooth trajectories in a lower-dimensional space. For certain types of such as surface vessels, quadrotors and differentially driven ground vehicles, such smooth trajectories can be expanded to positions, velocities, accelerations, rotations, rotation rates, forces, and torques of the vehicle at any point in time without numerical integration. Planning for smoothness in this way limits the flexibility of a planner but facilitates fast motion planning schemes and efficient replanning approaches. While ignoring the effects of disturbances, and not directly addressing minimization of signals such as the total thrust of the vehicle, such methods are widely used in practice.

While such methods can pose constraints on signals such as velocity and acceleration at specific points in time, constraints on such signals are challenging to implement at all times. Furthermore, relevant constraints such as the maximum force used by the actuators are generally non-linear and difficult to incorporate in the optimization problem without sacrificing computational performance. If additionally considering disturbances and additional constraints on the motion plan, which often becomes a necessity for safety critical applications, this needs to be done on much shorter time horizons. The reason for this is that involving the vehicle's nonlinear differential equations and discretizing the continuous state trajectory in a set of points results in more optimization variables per time unit of the motion plan. As such, planners that explicitly constrain the motion to behave as a vehicle subject to disturbances will inevitably have to operate with shorter time horizons and approximations of the nonlinear constraints.

Additionally, disturbances such as wind in UAV planning are typically treated over short horizons, as the uncertainty of any prediction of wind speed grows significantly in time. This is particularly true for the highfrequency components of the wind, which may produce unpredictable gusts. This makes it difficult to simultaneously guarantee performance and safety over long time scales.

Accordingly, there is a need for a safety mechanism that can guarantee operational safety, such that the motion satisfies both geometric constraints and input constraints subject to important classes of disturbances and structured uncertainties in the vehicle model that may adversely affect its performance and safety if disregarded.

[Summary of Invention]

Some embodiments are based on the realization that current methods of path planning for vehicles are either fast and operate over long horizons when planning for smoothness without incorporation of disturbance models, or more computationally heavy and can operate with descriptions of disturbances over shorter horizons while minimizing physically relevant costs and considering disturbances and modeling errors. One embodiment therefore computes robust invariant sets using a simpler vehicle model, accounting for realistic modeling errors and misspecifications in the disturbance models, such that statements can be made on how the vehicle will move at any point in time in the future, irrespective of how the disturbances and modeling errors are realized.

In embodiments such as those related to aerial vehicle planning and control, the exact shape of these robust invariant sets is not known. However, it is recognized that they can be approximated as convex shapes, e.g., ellipsoidal volumes, by formulating and solving a set of optimization problems. It is possible to approximate such sets when considering various behaviors of the vehicle modeled by structured uncertainties in the controller gains of the closed-loop system, disturbances arising from, for example, erroneously specified input disturbance models, and the effects of attitude tracking errors on the closed-loop control system. Notably, the robust invariant sets can be inflated into safe invariant sets, where all trajectories that start in the safe invariant set will eventually converge to the smaller robust invariant set and remains there for all future times, irrespective of the exact modeling errors and disturbances.

In various control applications, robust invariant sets refer to a set of states for a dynamical system that remains invariant under certain perturbations or uncertainties. These sets are useful in the analysis and design of robust control systems to ensure stability and performance in the presence of uncertainties.

In general, an invariant set for a dynamical system is a set of states such that if the system starts in this set, it remains in the set for all future time. Robustness in control theory refers to the ability of a system to maintain its performance despite variations or uncertainties in its parameters or operating conditions. A set is considered robustly invariant if, in addition to being invariant, it remains so under the influence of uncertainties or disturbances.

From specifications such as the geometry of the world and the maximum permissible thrust of the UAV, it is recognized that an unsafe motion plan computed using methods such as navigation fields or optimization-based motion planning can be made safe by considering the tracking errors in relation to the robust invariant sets and the safe invariant sets. Such methods have the advantage that the motion of the vehicle need not be characterized explicitly, as in the optimization-based approaches. Instead, the motion is implicit, and characterized by a closed-loop system response to a signal. This permits the analysis of the system response to a wide variety of disturbances. As such, it is possible to give guarantees on the safety or feasibility of a mission prior to its execution, both for conventional planning and re-planning.

In some embodiments, the unsafe motion trajectory is made safe by adjusting the rate of change of the set-point that the controlled vehicle is tracking. If the current errors are such that the system is close to the boundary of the safe invariant set, referred to as a small dynamic margin, the rate of change of the set-point is decreased to retain safety. Such embodiments represent safety mechanisms that update a continuous set-point or reference trajectory, and it is understood that such methods are compatible with optimization-based approaches for motion planning, as well as the navigation function-based approaches for motion planning.

In the navigation function motion planning approaches, a navigation function is constructed based on the obstacle geometry such that following the negative gradient of function ensures that obstacles are avoided. In some embodiments, this is done through two separate diffeomorphisms. A diffeomorphism is a structure-preserving mapping between two smooth manifolds of the same type. It allows a navigation field constructed in a simpler setting to be mapped onto more complicated problems. In contrast to the optimization-based approaches, where the motion trajectory is defined for all times, any trajectory that follows the negative gradient of the navigation field approaches the goal location specified in the mission information.

In other embodiments, the unsafe motion trajectory is made safe by formulating a graph of discrete set-points and switching between the set-points using logic that is similarly based on the current tracking errors in relation to the boundary of the safe invariant sets. It is recognized that constructing a graph based on the relationship between robust and safe invariant sets associated with the various vertices in the graph can be used to give formal guarantees on the safety at all future times, for any target set-point that is provided in the free space. In addition, it is recognized that such a method need not rely on navigation fields and optimization-based approaches. Rather, a cost encoding desirable behaviors of the vehicle can be specified as weights in the edges of the graph.

However, to facilitate such embodiments, the robust invariant sets need to be approximated. It is challenging and computationally expensive to determine such sets in the context of real-time control of dynamical systems. Robust invariant sets are often identified through reachability analysis which involves determining the set of states that can be reached by a system under various inputs and disturbances. However, the states of a dynamical system can be multidimensional, drastically increasing the computational complexity of a reachability analysis. Hence, the reachability analysis can be efficient for controlling a plant, such as a servomotor, with a limited number of states, but may be inefficient for controlling vehicles, such as autonomous vehicles, drones, etc.

In addition, the control of the vehicle is usually performed in a constrained environment defined by obstacles and other types of constraints. Performing a reachability analysis for complex dynamical systems such as vehicles controlled in a constrained environment is a computationally challenging task that is often unsuitable for embedded computational systems, such as ADAS and/or controllers of drones.

Therefore, there is a need for computationally efficient methods for computing and using robust invariant sets suitable for real-time control of the dynamical systems, such as autonomous vehicles and/or drones.

Some embodiments are based on decoupling generating robust invariant sets subject to the uncertainty of the dynamical system from generating invariant sets subject to constraints acting on the operation of the dynamical system. Specifically, it is realized that generating robust invariant sets subject to the uncertainty of the dynamical system under constraints can be solved in two parts. The first part includes generating an initial robust invariant set subject to an unconstraint model of a dynamical system including uncertainty. This initial robust invariant set accounts for uncertainty but ignores the constraints. The second part includes inflating the initial robust invariant set until the inflated initial robust invariant set hits the constraint. Some embodiments are based on recognizing that any inflation of the invariant set, i.e., increasing the invariant set equally in all directions, results in forming another invariant set. Hence, the inflation can be used to address the constraints.

Notably, the second part ignores the uncertainty of the dynamical system and focuses only on the constraints. Doing it in such a manner allows to generate the robust invariant sets subject to the uncertainty of the dynamical system operating under constraints in a computationally efficient manner.

Lyapunov functions play a role in proving that all possible trajectories in a closed-loop system remain stable, by showing that the Lyapunov function is non-increasing along the trajectories of the closed-loop system. It is recognized that the existence of a Lyapunov can be used to characterize a domain of attraction about a stable equilibrium point if one exists. When accounting for disturbances and modeling errors, this same Lyapunov function can be used to establish a robust invariant set, wherein all trajectories that are initialized in this set remain in the set for all future times irrespective of how the disturbances and modeling errors are realized. This robust invariant set can be seen as a generalization of the equilibrium point when the system is affected by disturbances.

In summary, this disclosure describes a safety mechanism based on efficient computations of safe and robust invariant sets that can make an unsafe motion plan safe given mission information with the continuous embodiment, and that can be implemented as a standalone graph-based motion planner if operating with the discrete set-points. In some embodiments, the planner and/or controller includes one or several processors and a memory having instructions stored thereon that, when executed by at least one processor, causes the planner and/or controller to collect via a combination of wired and wireless communication channels, a description of the disturbance, a high-level description of the mission, and a description of the world geometry. The processor first formulates this input data to a set of constraints and subsequently formulates an optimization problem to compute robust and safe invariant sets. The processor subsequently passes this information to the controlled vehicle, either by sharing memory or by any number of wired and wireless communication channels, and the controlled vehicle subsequently computes a safe set-point trajectory to follow using either the continuous or discontinuous embodiments of the safety mechanism.

[Brief Description of Drawings]

[Fig. 1A]

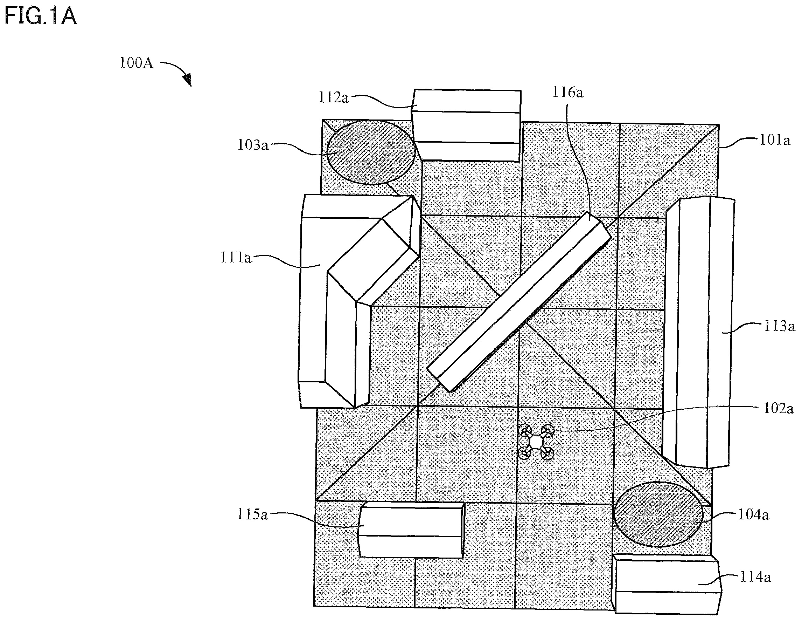

Figure 1A illustrates an example environment where a motion plan is computed according to an embodiment of the present disclosure.
[Fig. 1B]

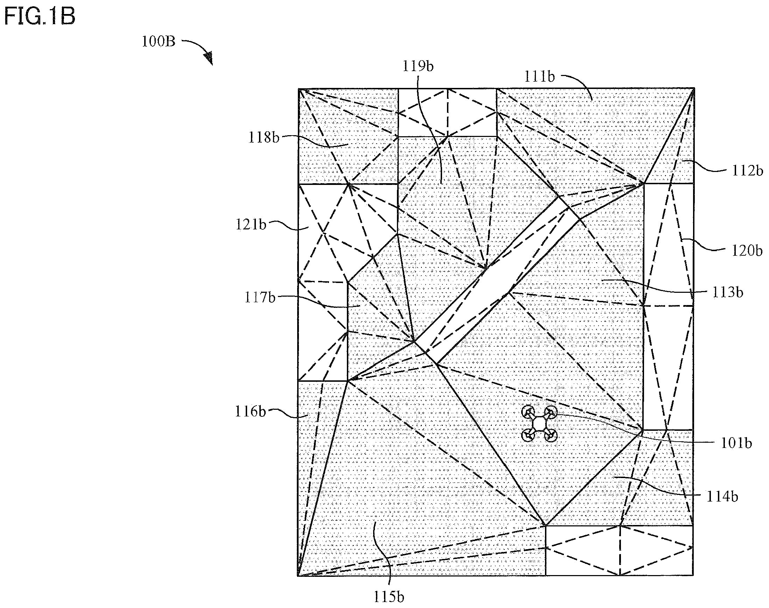

Figure 1B illustrates how the obstacles and free space is represented as polyhedral sets according to one embodiment of the invention.
[Fig. 1C]

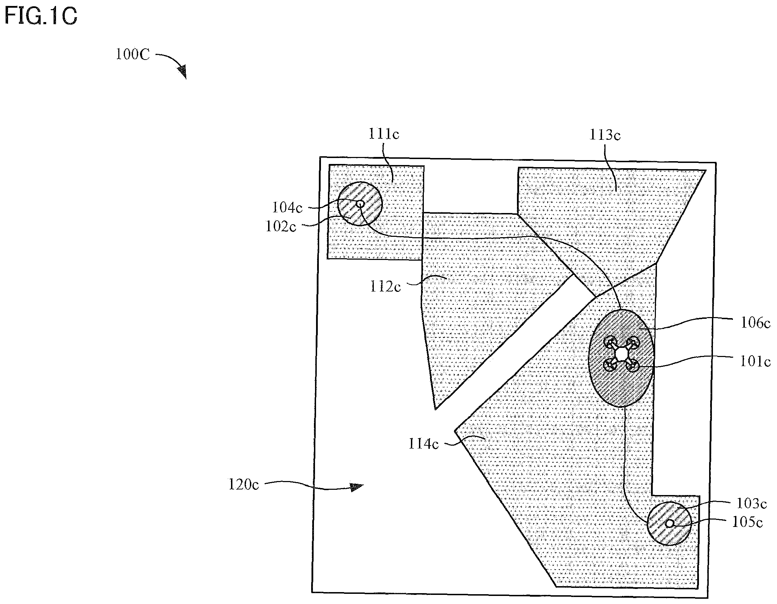

Figure 1C demonstrates how a feasible motion plan is computed in free space, connecting a starting region with a goal region in an embodiment of the invention.
[Fig. 1D]

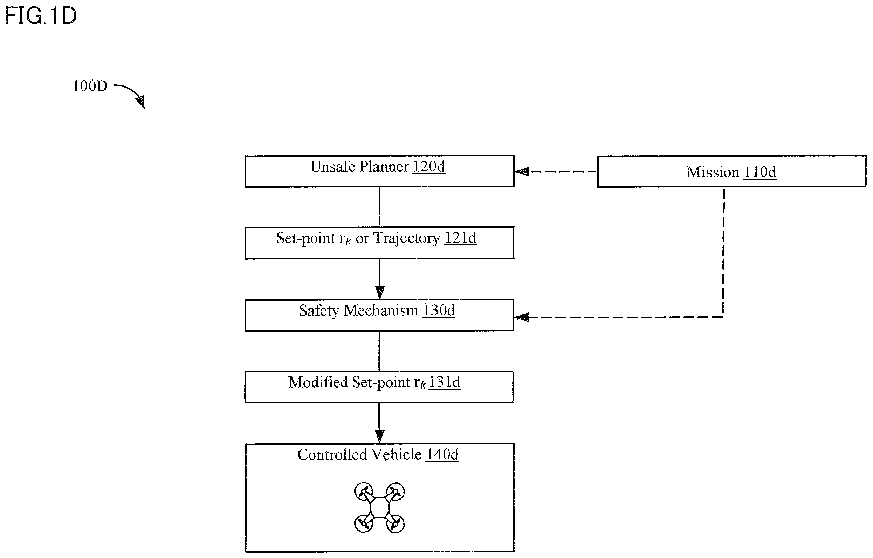

Figure 1D shows how an unsafe planner computes a motion plan based on mission information, and how this plan is modified by a safety mechanism.
[Fig. 1E]

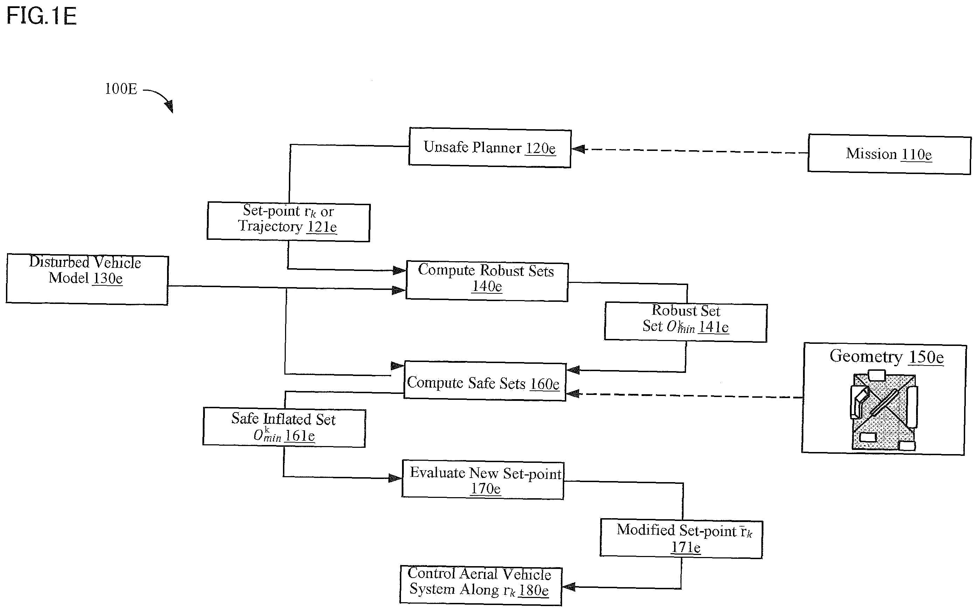

Figure 1E details how this safety mechanism is constructed using robust and safe invariant sets, according to one embodiment of the present disclosure.
[Fig. 1F]

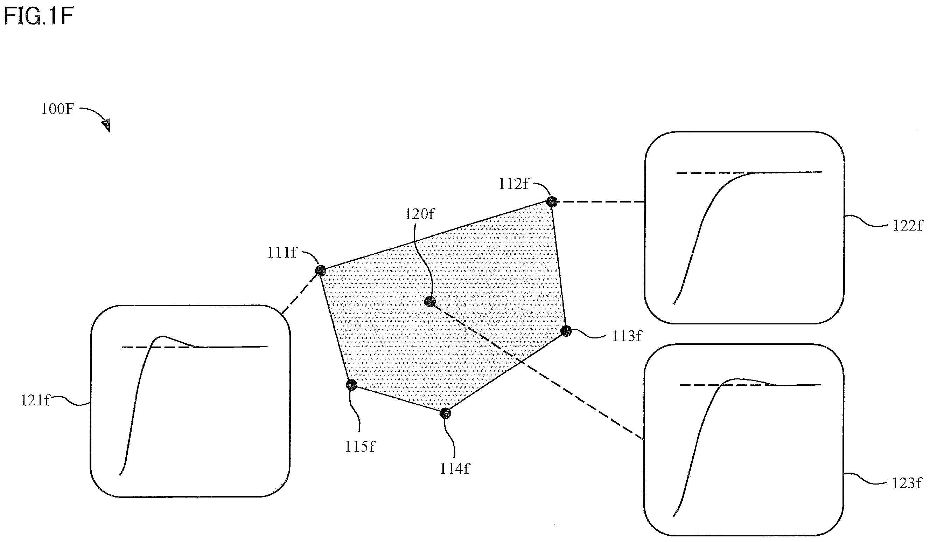

Figure 1F illustrates the polytopic uncertainty set characterizing the possible responses of the disturbed vehicle model.
[Fig. 2A]

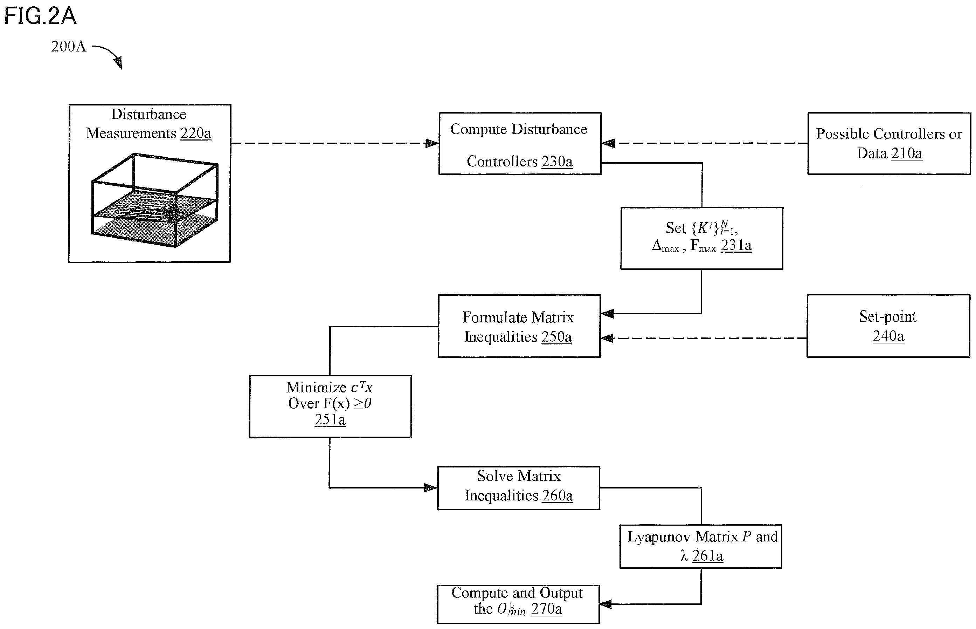

Figure 2A contains a block diagram detailing how the robust invariant sets are computed in some embodiments.
[Fig. 2B]

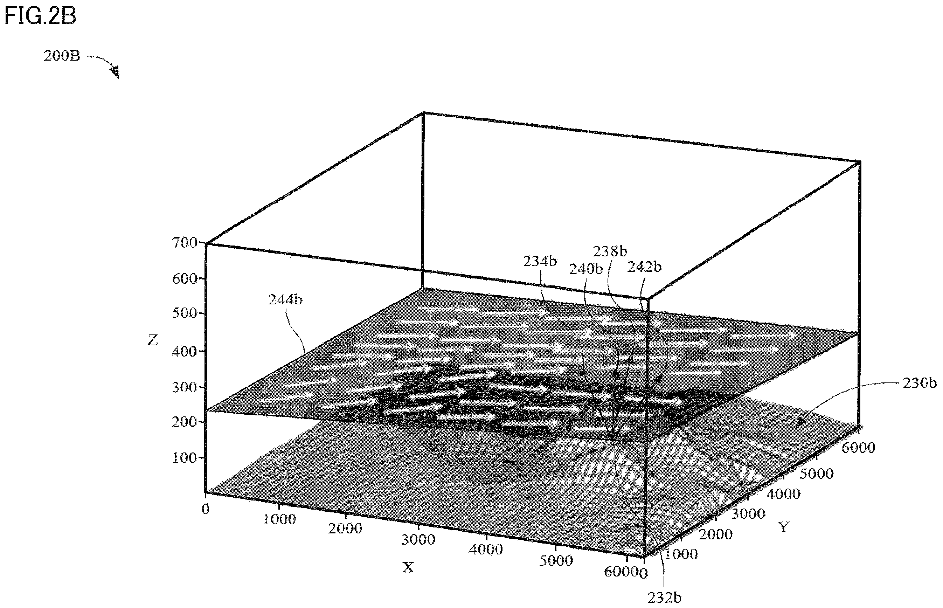

Figure 2B illustrates an environment in which a sensor is measuring a wind field, which is an exemplar disturbance that may be used in the invention.

[Fig. 2C]

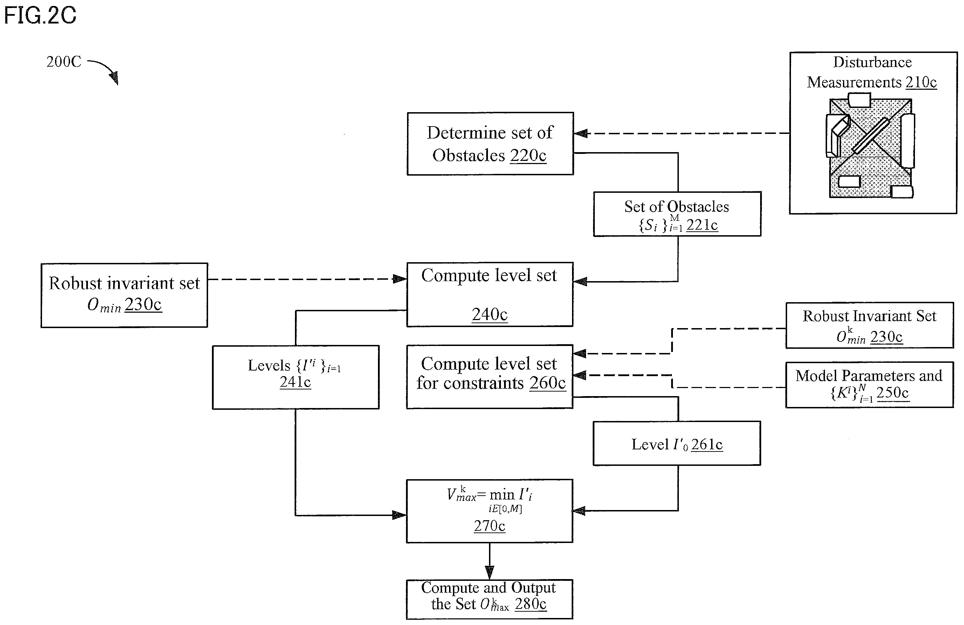

Figure 2C details how the robust invariant sets can be inflated to compute safe invariant sets, according to one embodiment of the invention.

[Fig. 2D]

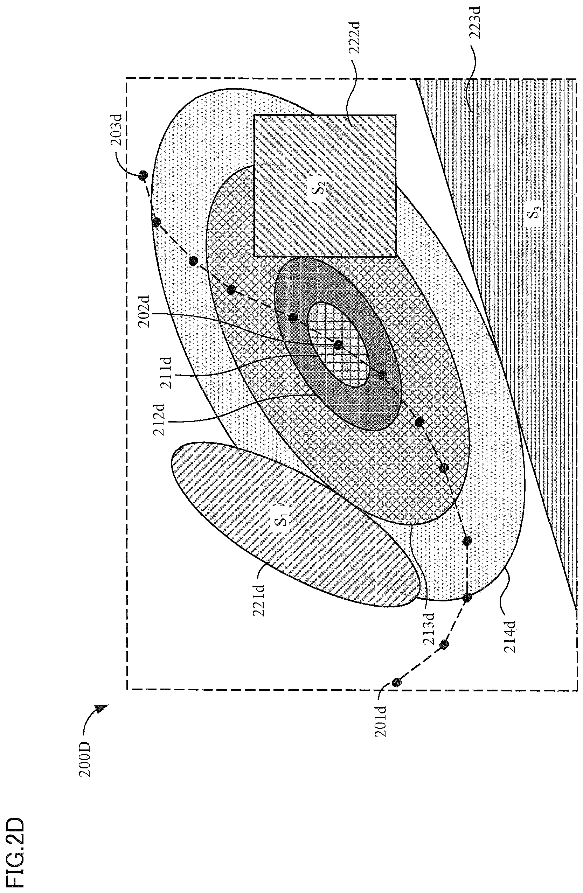

Figure 2D details how the safe invariant sets relate to the obstacles in the environment, centered on the intended path of the vehicle.

[Fig. 3A]

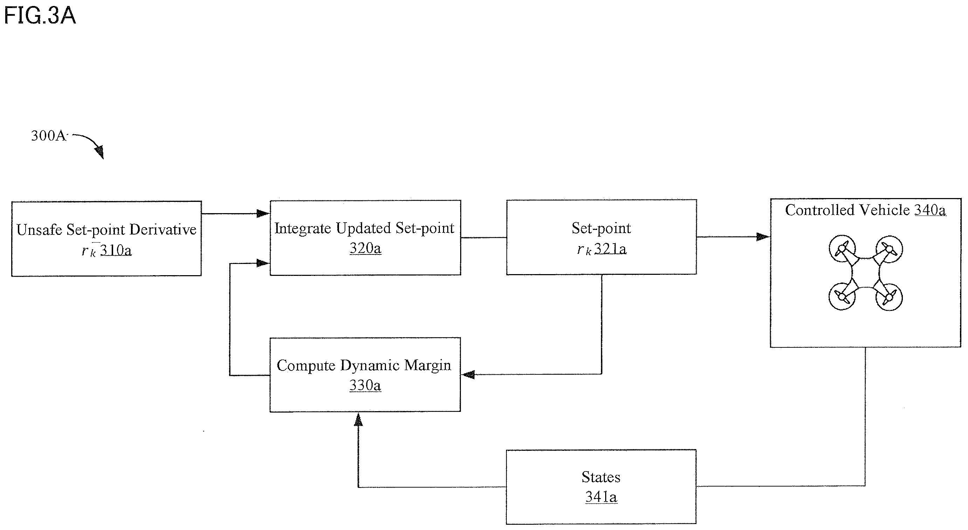

Figure 3A contains a block diagram depicting how the safety mechanism is designed in one embodiment of the invention.

[Fig. 3B]

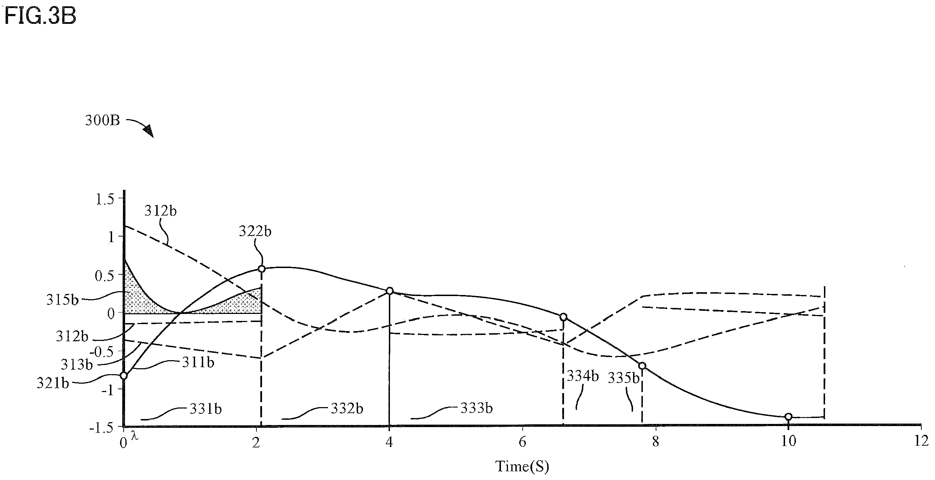

Figure 3B illustrates an unsafe trajectory computed using optimization-based methods, used as input in one embodiment of the safety mechanism.

[Fig. 3C]

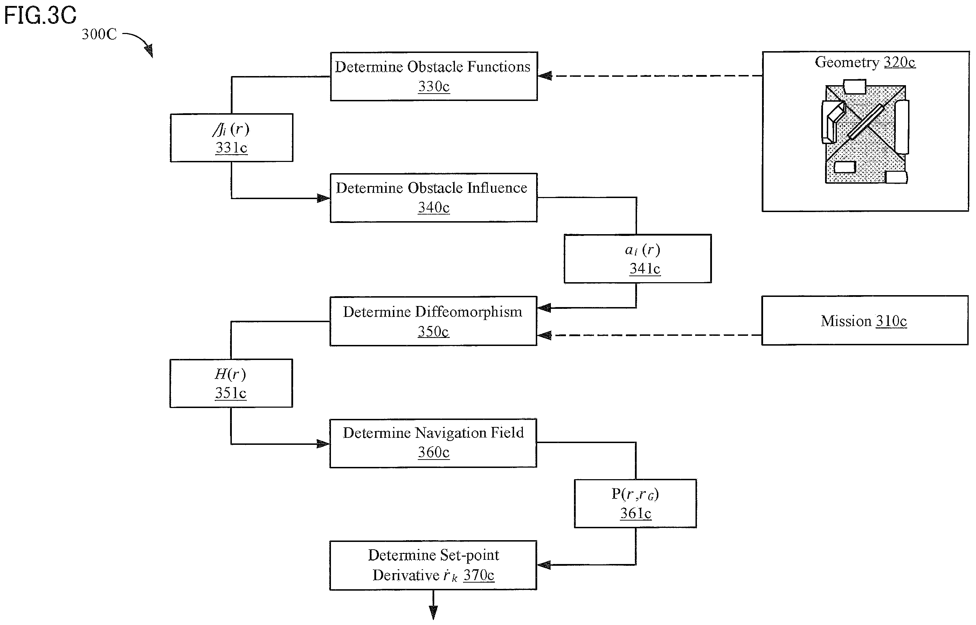

Figure 3C shows a block diagram indicating how the reference can be computed using a navigation function, used in one embodiment of the invention.

[Fig. 3D]

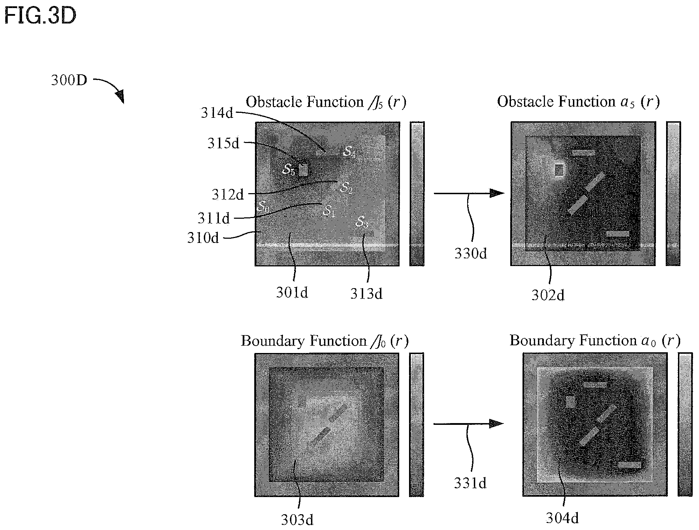

Figure 3D illustrates the shape of the obstacle functions and their resulting influence functions in one embodiment of the present disclosure.

[Fig. 3E]

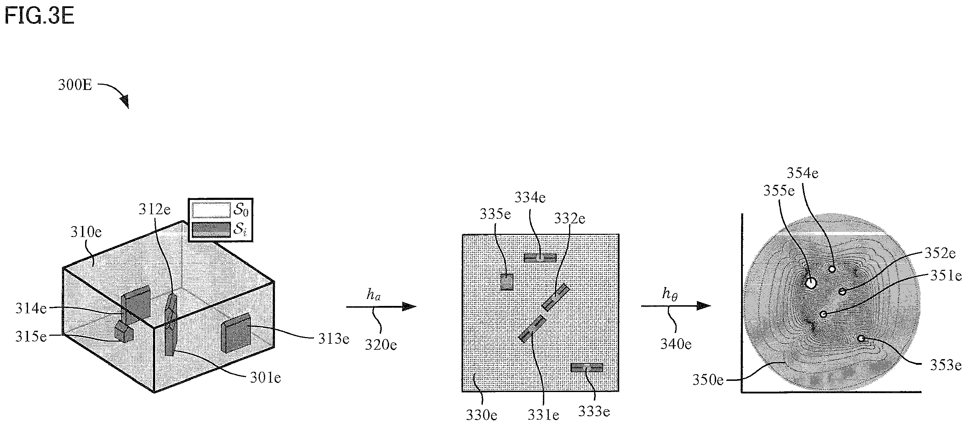

Figure 3E shows how a polyhedral workspace with polyhedral obstacles can be mapped to a spherical world with spherical obstacles which is used to constructing the navigation field in one embodiment.

[Fig. 3F]

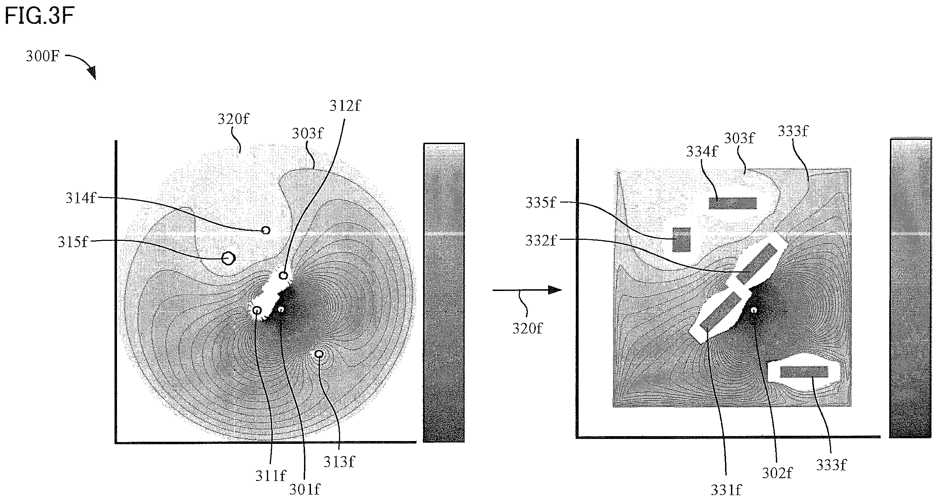

Figure 3F shows a navigation field in the spherical world, and how this translates into the coordinates of the original polyhedral world.

[Fig. 3G]

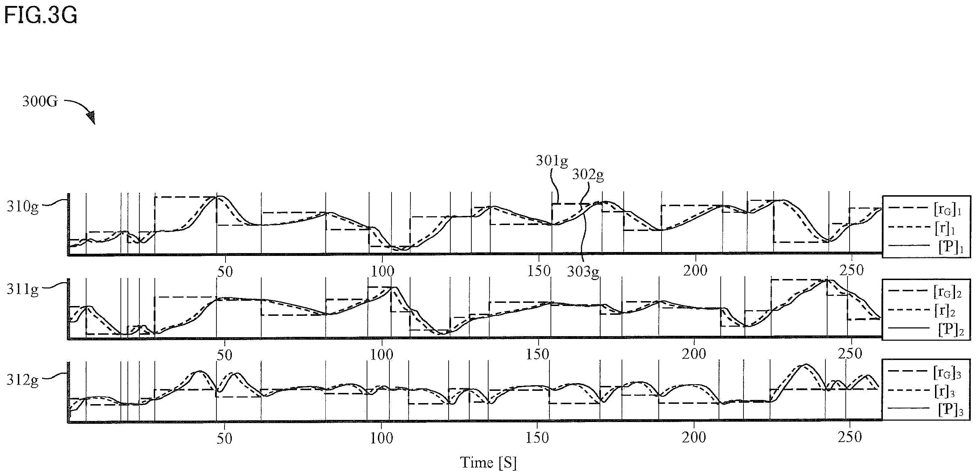

Figure 3G illustrates how a controlled vehicle tracks a modified reference with new missions being sent to the controlled system at different points in time.

[Fig. 3H]

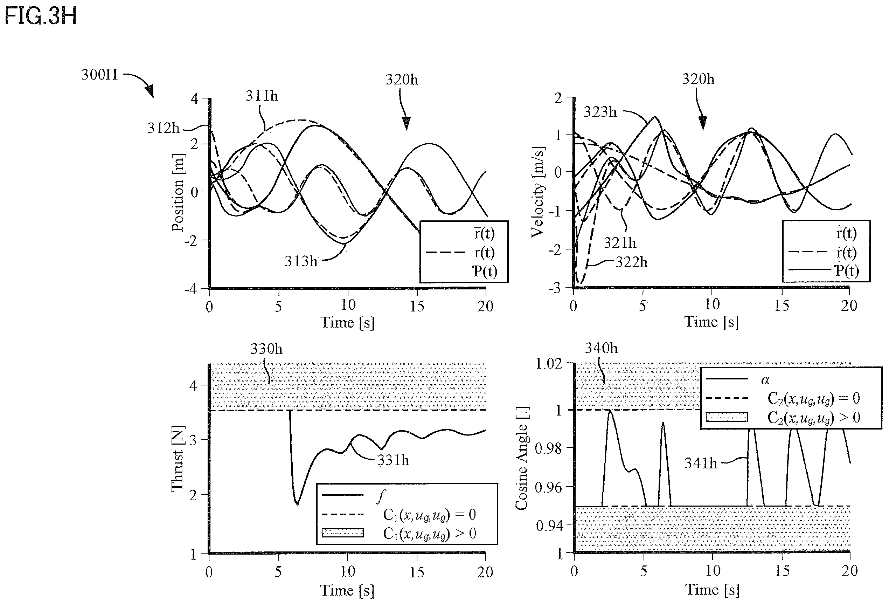

Figure 3H shows an embodiment in which the invariant sets are used in a model predictive control framework to continuously update the reference trajectory.

[Fig. 4A]

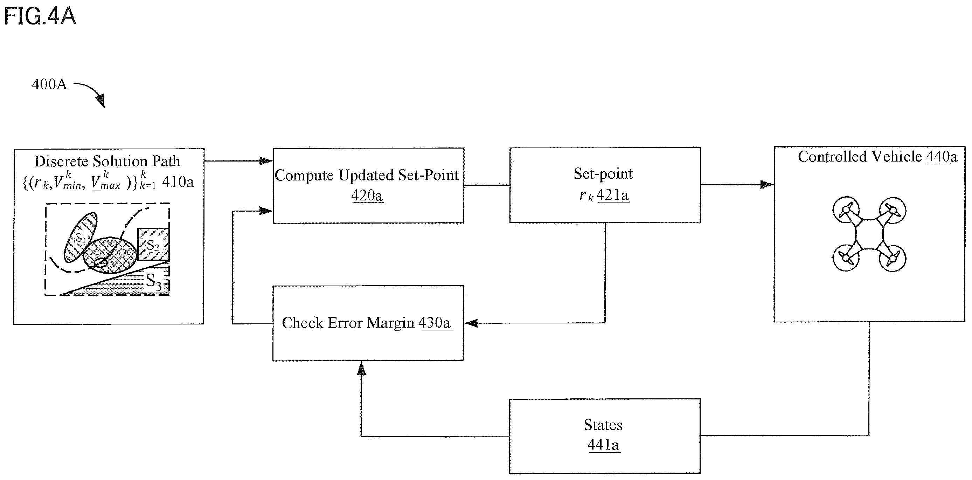

Figure 4A contains a block diagram depicting how the safety mechanism is designed in one embodiment of the invention.

[Fig. 4B]

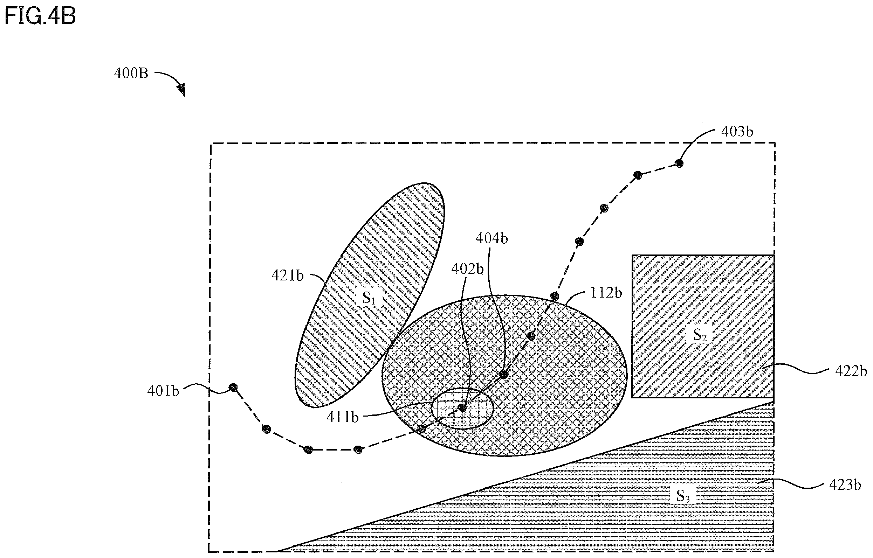

Figure 4B shows how to define the connectivity of the graph from the robust and safe invariant sets to form a path from initial vertex with a terminal vertex.

[Fig. 4C]

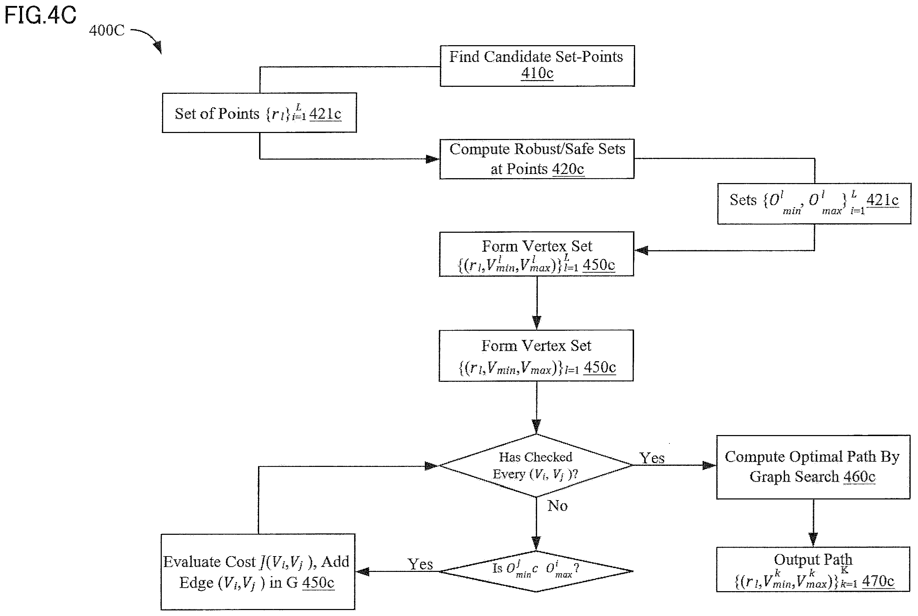

Figure 4C shows how the connectivity of the graph is determined according to one embodiment of the present disclosure.

[Fig. 4D]

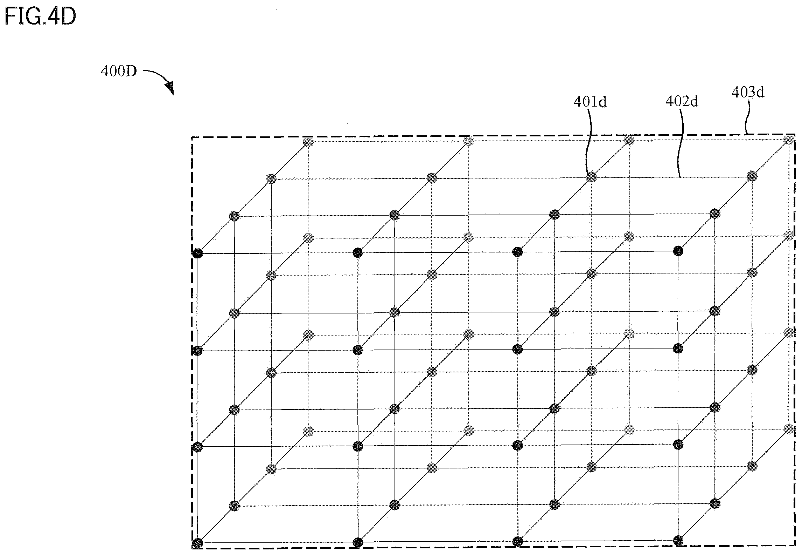

Figure 4D shows how candidate the set-points are sampled in space using a lattice-based construction, used in one embodiment.

[Fig. 4E]

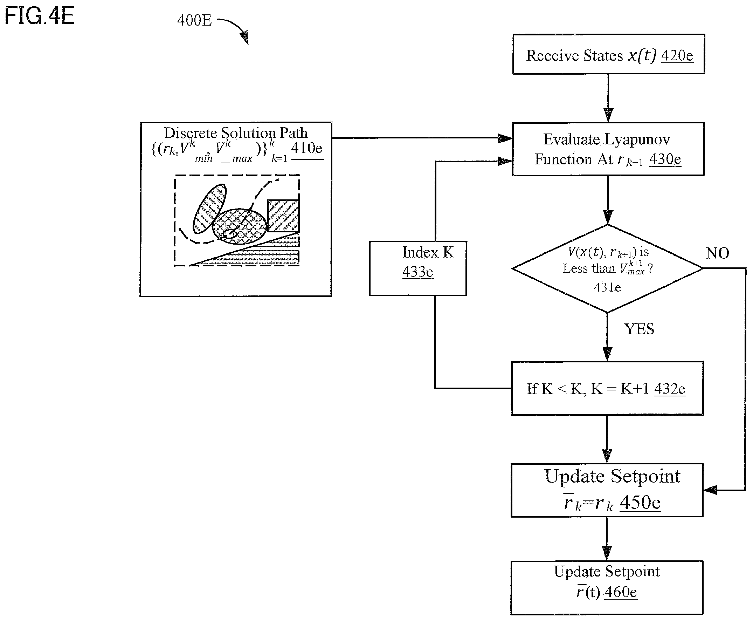

Figure 4E illustrates how the set-points are updated based on a switching condition used in one embodiment of the present disclosure.

[Fig. 4F]

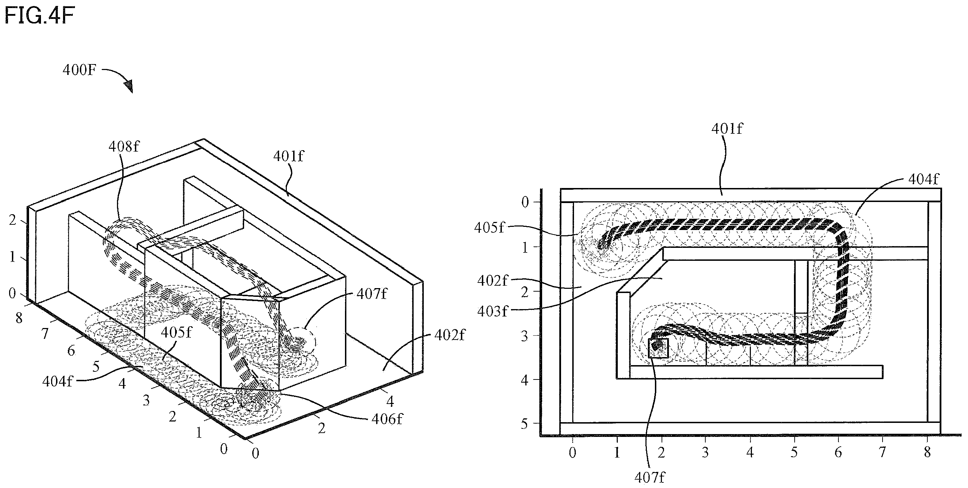

Figure 4F shows how the safe path is tracked by a vehicle in an indoor environment, which is one exemplar of the invention.

[Fig. 4G]

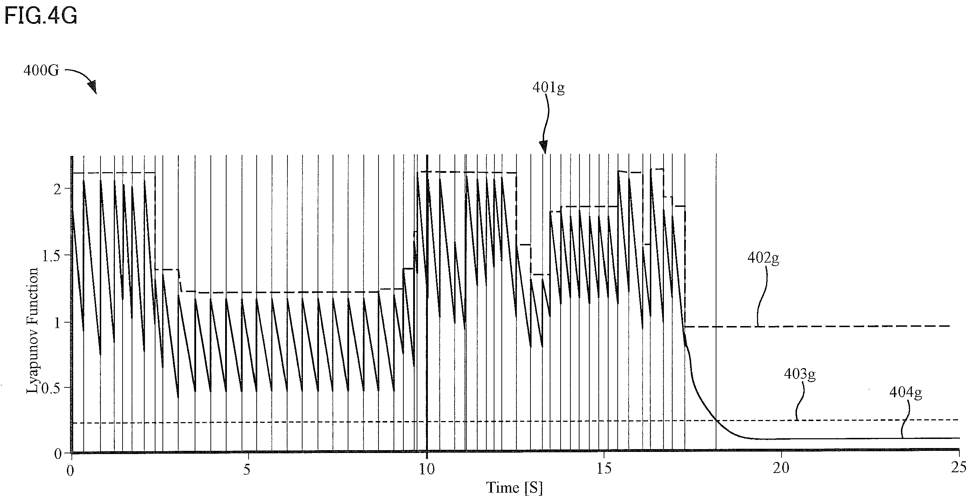

Figure 4G how the errors of the system remain within their designated sets when switching between different set-points in time, as done in one embodiment.

[Fig. 5A]

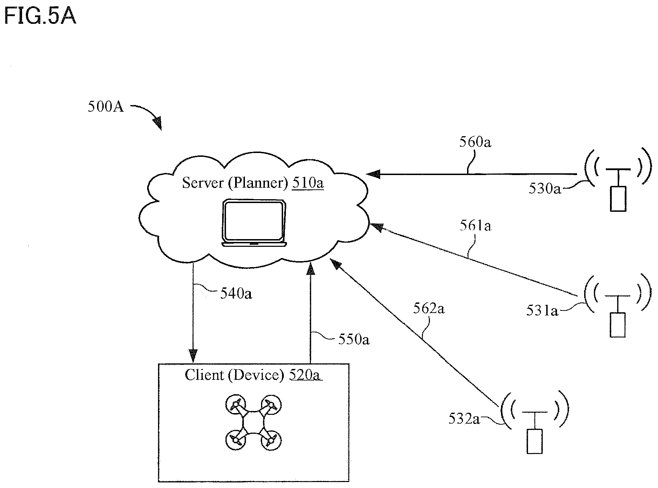

Figure 5A shows a schematic of the communication and structure for an embodiment in which the vehicles perform remote sensing of the disturbance.

[Fig. 5B]

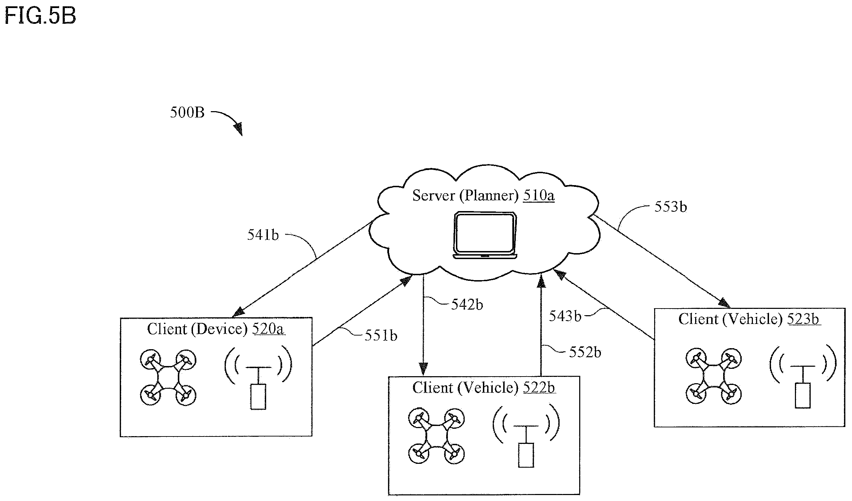

Figure 5B shows a sketch of how the invention may be modularized as a service for a generic vehicle that can request a motion plan.

[Fig. 6]

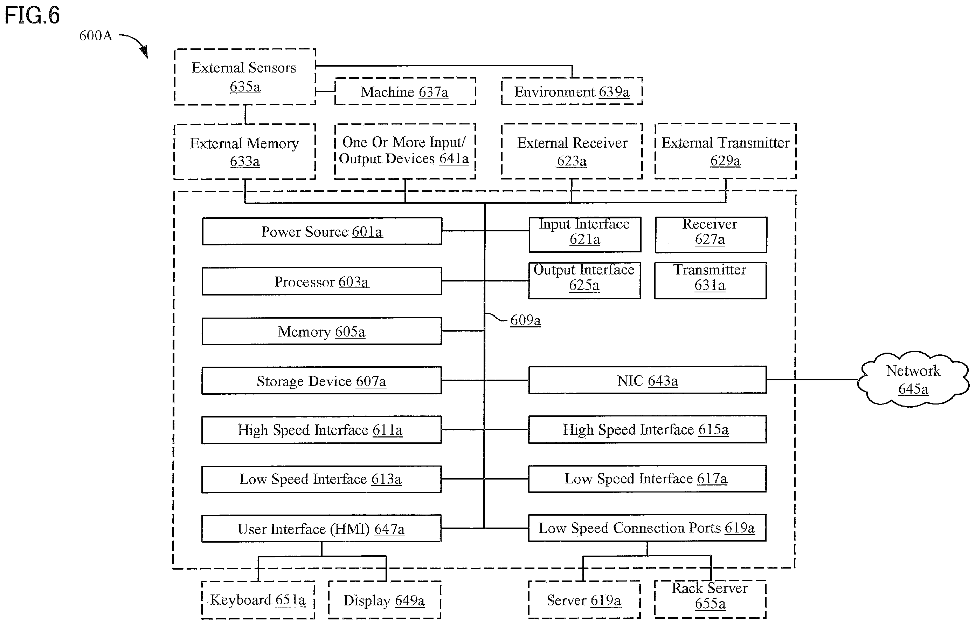

Figure 6 is a schematic illustrating a computing device for implementing the methods and systems of the present disclosure.

[Description of Embodiments]

In the following description, for purposes of explanation, numerous specific details are set forth to provide a thorough understanding of the present disclosure. It will be apparent, however, to one skilled in the art that the present disclosure may be practiced without these specific details. In other instances, apparatuses and methods are shown in block diagram only to avoid obscuring the present disclosure.

As used in this specification and claims, the terms "for example," "for instance," and "such as," and the verbs "comprising," "having," "including," and their other verb forms, when used in conjunction with a listing of one or more components or other items, are each to be construed as open ended, meaning that that the listing is not to be considered as excluding other, additional components or items. The term "based on" means at least partially based on. Further, it is to be understood that the phraseology and terminology employed herein are for the purpose of the description and should not be regarded as limiting. Any heading utilized within this description is for convenience only and has no legal or limiting effect.

Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail to avoid obscuring the embodiments. Further, like reference numbers and designations in the various drawings indicated like elements.

Figure 1A illustrates an example with an environment 100a contained in a boundary 101a where a vehicle 102a is to move and execute a task, according to an embodiment of the present disclosure. It is an objective of some embodiments to compute a motion plan for the vehicle 102a from an initial state in a set 103a to a target state in a set 104a, both defined in the environment 101a. In one embodiment, the vehicle is provided the task of reaching the target state 104a, in other embodiments the vehicle is to move from state to the target state 104a and back while exploring a designated part of the obstacle free environment 100a. The state of the vehicle 102a may include one or a combination of a position of the vehicle 102a, an orientation of the vehicle 102a, a velocity of the vehicle 102a, or other states relating to its actuation.

The environment 100a includes obstacles 111a, 112a, 113a, 114a, 115a, and 116a. Some of these obstacles are convex, such as 112a, and others are non-convex, such as 111a. The vehicle 102a may be an autonomous vehicle, such as a differentially driven mobile robot, an aerial vehicle, a water surface vehicle, or an underwater vehicle. The task's performance is contingent on satisfaction of constraints on the vehicle's 102a motion relating to the environment 100a. In other words, the performance of the task is subject to the constraints. Examples of such constraints include reaching the target region 104a, avoiding collision with the obstacles 111a-116a (i.e., a vehicle-obstacle collision avoidance constraint), moving the vehicle 102a such that the state of the vehicle 102a (e.g., position) is within a pre-defined set of admissible states of the vehicle 102a (i.e., a keep-in constraint), and the like. For instance, an airborne vehicle such as a drone can be tasked to reach certain positions to inspect a structure while avoiding collisions with parts of the structure.

Figure 1B illustrates how the environment 100B may be decomposed into sets of free space, in which the vehicle 101b is free to operate and move. In one embodiment, this is done by computing a mesh comprised of polyhedral sets 120b over the entire environment, before subsequently combining these smaller sets into larger sets 111b-119b. It is understood that this operation can be done in many ways, for instance using submodular coverage optimization or simpler heuristics that iteratively remove edges from the collection of edges in the mesh. The result of any such operation is a collection of sets. The union of these sets covers all the free space in some embodiments, and most of the free space in others. Similarly, the non-convex obstacles such as 121b can be decomposed into a set of convex obstacles. It is understood that some such decompositions may result in convex polyhedral obstacles, convex ellipsoidal obstacles, or other convex shapes whose union contain the non-convex obstacle in its interior.

In Figure 1C, a motion plan is depicted wherein a vehicle 101c is to move from a start region 102c to the terminal region 103c while passing through connected sets of free space 111c-115c and always remaining in a safe set 106c. In some embodiments, the segments are constrained to reside on a designated subset of free space. For instance, segment 121c is confined to the set 111c. In other embodiments, the motion is constrained to the intersection of two connected sets of free space, such that the end point of segment 111c is constrained to the intersection of the sets 121c and 122c. In yet other embodiments, the motion is characterized by modifying a reference such that the vehicle remains in a safe invariant set 106c such that it never intersects with the obstacle region 120c.

Figure 1D illustrates how information describing a mission 110d is used to compute an unsafe motion plan 120d which is represented as a set-point or trajectory 121d. It is understood that some motion planners that do not compute trajectories are safe given disturbances and uncertainties in the model parameters. Consequently, the safety mechanism 130d modifies the set-point or trajectory 121d to make it safe given assumptions on the disturbances and uncertainties of the model and knowledge of the geometry of the world. The modified set-point or trajectory 121d is subsequently used to control the vehicle 140d, ensuring that its motion remains safe.

The mission 110d may comprise of single waypoints or a set of waypoints that the UAV should visit in sequence, or more abstract information such as tasks depending on the embodiment of the unsafe planner. Such tasks may include landing, taking off, acquiring sensory information, among other tasks. Provided that the unsafe trajectory can take the mission and compute a reference trajectory or set points for the vehicle, several types of missions are used either in isolation or conjunction.

In the following, it is understood that a vehicle that is to track a set-point has one or more controllers operating on a stabilization or tracking error to steer the vehicle towards the desired set-point. The model that takes the set-point as input and models the closed-loop behavior of the vehicle subject to this setpoint and disturbances is known as the "disturbed vehicle model." This is a dynamical system with several parameters, hereinafter referred to as gains.

Figure 1E details how the set-point or trajectory is modified to produce a safe reference using robust invariant sets. The mission 110e is passed to the unsafe planner 120e to compute a set-point or trajectory 121e which is used to compute a robust invariant set 140e using a vehicle model 130e that includes assumptions on how the disturbances interact affect the vehicle and a set to which they are confined, and structured uncertainties in the dynamics describing the time-evolution of the vehicle. In one embodiment, the vehicle mode 130e is a second-order differential equation with polytopic uncertainty in the parameters of the differential equation. In yet other embodiments, the disturbance is an additive input disturbance with a known bound. In yet other embodiments, the structured uncertainties are induced by errors in the attitude tracking control system of the vehicle, responsible for controlling its rotation. In another embodiment, the model has saturations limiting the maximum and minimum accelerations of the vehicle. In other embodiments, the disturbed vehicle model includes either one or more of the polytopic uncertainty in the parameters, bounded input disturbances, attitude tracking control errors, and input constraints. One such disturbed vehicle model for disturbed unmanned aerial vehicles is

$$\ddot{p} = -\widetilde{R}K_{\mathrm{p}}(p - r) - \widetilde{R}K_{\mathrm{v}}v + \Delta,$$

where the disturbance is characterized by

$$\Delta = m^{-1}f + g(I - \widetilde{R})e_3,$$

and the disturbing force $f$ is bounded as $\|f\| \leq f_{\max}$. In this embodiment, the disturbed vehicle model is characterized by a set of possible controller gains $\mathrm{Co}(\{(K_p^i, K_v^i)\}_{i=1}^N) = K$, and it is assumed that the controller gains that best describe the response of the controlled vehicle resides within this set. In this case the true system response characterized by $K = (K_\mathrm{p}, K_\mathrm{v}) \in K$, and only known in approximate sense with the set K spanned by N known elements $(K_p^i, K_v^i)$. Furthermore, the embodiment includes a maximal bound on the attitude tracking error in the sense that $\alpha = \max_{\|u\|=1} \arccos(u^T\widetilde{R}u) \leq \alpha_{\max}$. It is understood that all of the parameters $f_{\max}, \alpha_{\max}, \{(K_p^i, K_p^i)\}_{i=1}^N, N, m, g$ need not be known, and that some or all of these parameters can be identified or learned from data either online or offline.

The disturbed vehicle model is used to compute a robust set 131e, in which the closed-loop control system will reside for all future times subject to the disturbed vehicle model 130e. In some embodiments, the robust set 131e is ellipsoidal, and in others it is polyhedral. Based on the geometry of the world in which the vehicle operates 150e safe robust sets are computed 160e. Any vehicle that starts in a safe robust set 161e remains in the set at all future times, and the safe robust sets are computed such that they do not intersect with the obstacles in the world. In some embodiments, the obstacles are convex or non-convex polytopes, in others they are ellipsoidal volumes, and in yet others they are a combination of both.

Based on the inflated safe sets, a new set-point 171e is evaluated using a safety mechanism 170e based on the inflated obstacles 161e. The modified set-point is sent to the closed loop control system and used to control the vehicle.

Figure 1F illustrates the polytopic uncertainty set characterizing the possible responses of the disturbed vehicle model. The uncertainty set 110f is defined as $\mathrm{Co}(\{(K_p^i, K_v^i)\}_{i=1}^N) = K$ and spanned by a set of possible controller gains, $\{(K_p^i, K_v^i)\}_{i=1}^N$ 111f, 112f, 113f, 114f, 115f, wherein each element of this set is associated with a particular system response. For example, the gains 111f are associated with fast and slightly under-damped response 121f, while the gains 112f are associated with a more damped and slower response 122f. The true gain that the controlled vehicle is best represented by $K = (K_p, K_v)$ 120f resides somewhere in this set, that is $K \in$ K. This gain 120f is not known, and associated with a system response 123f that is not as fast and under-damped as the response 121f yet not as slow and damped as the response 122f. It is understood that this is a simplified illustration of this set.

*Computing invariant sets*

Figure 2A shows how the robust invariant sets can be computed by solving an optimization problem. A large set of possible controllers 210a, measurements by which they can be computed 220a, or both are used to compute a smaller set of possible controllers 230a. In one embodiment, the output of these computations are a set $\{(K_p^i, K_v^i)\}_{i=1}^N$ defining the $K$ and the bounds on the disturbances $\alpha_{max}$ and $f_{max}$ 231a. In other embodiments, only the bound $\Delta_{max}$ is computed. Based on this information, an optimization problem is defined to minimize a linear objective $c^T x$ subject to linear matrix inequality constraints F(x) $\geq$ **0** with decision variables x.

In some embodiments, this optimization problem is defined with decision variables x = $(P, \lambda)$ which characterize an ellipsoidal set. Specifically, the problem is:

$$\min_{\substack{P \in S_{++}^{6\times 6} \\ \lambda > 0}} (\lambda)$$

subject to

$$\begin{bmatrix} A_i P + P A_i^T + P & PB \\ B^T P & -\lambda I \end{bmatrix} \leq 0, \forall i = 1, \dots, N,$$

$$P \geq I,$$

where

$$A_i = \begin{bmatrix} 0 & I \\ -K_p^i & -K_v^i \end{bmatrix},$$

$$B = \begin{bmatrix} 0 \\ I \end{bmatrix}.$$

In other embodiments where structured uncertainties are included, the optimization problem is defined with the decision variables $x = (P, \overline{P}, \lambda)$, and formulated:

$$\min_{\substack{P \in S_{++}^{6\times 6} \\ \overline{K} \in S_{++}^{6\times 6} \\ \lambda > 0}} (\lambda)$$

subject to

$$\begin{bmatrix} A_i P + P A_i^T + P + \beta \overline{K} & PB & \sqrt{\beta} PB \\ B^T P & -\lambda I & 0 \\ \sqrt{\beta} B^T P & 0 & -I \end{bmatrix} \leq 0, \forall i = 1, \dots, N,$$

$$P \geq I,$$

$$\begin{bmatrix} \bar{K} & K_i^T \\ K_i & I \end{bmatrix} \geq 0,$$

where

$$K_i = \begin{bmatrix} K_p^i & K_v^i \end{bmatrix},$$

$$\beta = \sqrt{2(1 - cos(\alpha_{max}))}.$$

It is understood that the latter formulation manages to incorporate the structured uncertainties generated by nonperfect attitude tracking. In both cases, the procedure results in a quadratic Lyapunov function

$$V(p, r, v) = \left\| \begin{bmatrix} p \\ v \end{bmatrix} - \begin{bmatrix} r \\ 0 \end{bmatrix} \right\|_P^2.$$

Where the level set $V(p, r, v) \leq \lambda \Delta_{max}^{-2} = V_{min}$ is forward invariant and characterizes an inner approximation of the robust invariant set. In the context of the quadrotor UAV dynamics used in this exemplar, this corresponds to a six-dimensional hyper ellipsoid. It is understood that subject to the disturbed vehicle model, a controlled vehicle that starts tracking a set-point *r* will remain in the robust invariant set at all future times as long as the set-point remains constant. It is also understood that other representations and approximations of the robust invariant sets are possible, such as through zonotopes or polytopic representations.

Having formulated the optimization problem 250a it is solved 260a and the solution in terms of the Lyapunov matrix P and the bound $\lambda$ 261a are used to compute the robust invariant set $O_{min}$ 270a.

Figure 2B shows a schematic of a remote sensing of wind over a complex terrain 230b used by some embodiments. The LiDAR sensor 232b arranged at a point, e.g., at a top of a hill, performs series of line-of-sight measurements on a cone including measurements 234b, 238b, 242b along the surface of the cone, and measurements along the center line 240b. The measurements are taken for different altitudes corresponding to different planes 201b. In such a manner, for a set of altitudes corresponding to planes 244b, the measurements on the cone are measurements on a circle including multiple measurements of the radial velocities in different angular directions measured at different line-of-site points on a circumference of the circle and one measurement of the radial velocity in a vertical direction measured at a center of the circle.

Some such sensors aim to determine a horizontal velocity of the wind flow for each altitude. Given these measurements, an estimate of the horizontal velocity can be determined from the measurements of the radial velocity using a geometrical relationship and assuming that the wind velocity is homogenous on each plane. Here, is the estimated velocity of the wind flow based on homogenous assumption. Some LiDAR sensors are based on recognition that, for complex terrains, such as the terrain 200B, the homogenous velocity assumption leads to a bias in LiDAR estimation of horizontal velocity. The main error is due to variation of the vertical velocity, e.g., along the hill. To that end, some sensors are based on the realization that the homogeneous velocity assumption in sensing wind flow passing over the complex terrain can be corrected using a horizontal derivative of vertical velocity. Such measurements can be used to inform the bounds of the disturbances of the controlled vehicle system.

Figure 2C describes how the safe invariant sets can be determined by solving a quadratic program according to one embodiment of the invention. A set of obstacles are determined 220c from the problem geometry 210c. The geometry can either be estimated or provided in terms of a mesh in formats such as a digital asset exchange file (DAE) or the Standard Tessellation Language (STL) and is then converted into a set of convex polytopes and ellipsoids, collectively referred to as the set of obstacles 221c. It is understood that individual obstacles from the set of obstacles 221c may be static or moving, or that some of the obstacles may be static and others may be moving. For each obstacle in the set of obstacles 221c, and a given robust invariant set 230c computed as described in Figure 2B, the robust invariant set 230c is inflated to produce a candidate safe invariant set defined by the Lyapunov matrix and a level in the set of levels $\{\Gamma_i\}_{i=1}^M$ 241c. The set 241c is computed by solving a quadratic program, a method of projection, or geometric heuristics to find a level set to the Lyapunov function associated with the robust invariant set 230c, such that all trajectories that start in the safe set remain in the safe set for all future times without colliding with an obstacle in the set of obstacles 221c. One such level set is computed for each obstacle in the set of obstacles 221c. Furthermore, given the disturbed vehicle model and the robust invariant set 230c, an additional level $\Gamma_0$ can be computed for the input constraints of the disturbed vehicle model 250c, such that all trajectories that start in the associated invariant set always satisfies the input constraints. The set of levels 241c and the level 261c are then combined to compute the largest safe set in which all geometric and input constraints are satisfied. This is done by taking the smallest level in the set of levels 241c combined with the level 261c.

$$V_{max}^{k} = \min_{i \in [0,M]} \Gamma_i.$$

Based on this smallest level, the safe robust set is computed and reported 280c, as

$$O_{\max}^{k} = \left\{ x \in R^{2n} \mid (x_e^k)^{\mathrm{T}} P x_e^k \leq V_{\max}^k, x_e^k = x - \left( r_k^{\mathrm{T}}, 0 \right)^{T} \right\}.$$

It is recognized that for vehicles such as aerial vehicles, input constraints such as the maximum thrust used by the disturbed vehicle model can be considered in the context of a Lyapunov matrix P by solving an optimization problem

$$\min_{(\lambda_{11}, \lambda_{12}, \lambda_{22}) \in R^3} (\lambda)$$

subject to

$$\begin{bmatrix} P & \mathrm{diag}(K_p^i, K_v^i) \\ \mathrm{diag}(K_p^i, K_v^i) & \Lambda \end{bmatrix} \geq 0, \forall i = 1, \ldots, N,$$

$$\begin{bmatrix} \lambda_{11} & \lambda_{12} \\ \lambda_{12} & \lambda_{22} \end{bmatrix} = \Lambda,$$

$$\lambda_{11} + 2\lambda_{12} + \lambda_{22} = \lambda,$$

and subsequently computing the additional level $\Gamma_0$ as follows

$$\Gamma_0 = (f_{\max} - mg)^2 m^{-2} \lambda^{-1}.$$

Figure 2D illustrates how the set of levels 241c are computed with respect to three obstacles in two-dimensional space. The robust invariant sets are computed for the set-points 201d, 202d, 203d, and is here illustrated for the set-point 202d with the ellipse 211d. By scaling this robust invariant set and its associated level, the set 201d is computed with respect to the ellipsoidal obstacle 2021d characterized by a level $\Gamma_1$ in the set of levels 241c, the set 212d is computed with respect to the polyhedral obstacle 222d characterized by a level $\Gamma_2$ in the set of levels 241c, and the set 213d is computed with respect to the half-plane or wall constraint 223d characterized by a level $\Gamma_3$ in the set of levels 241c. Of these, the candidate safe set 212d associated with the polyhedral obstacle 222d is contained in the other two candidate safe sets 211d, 213d. Thus, the safe robust set is determined as the invariant set 212d and is found by taking the minimum of the levels in the set of levels 241c associated with the candidate safe robust sets 211d, 212d, 213d. The nature of the safe invariant set 212d is that all trajectories that start within it remain in the set at all future times, and eventually converges to the smaller robust invariant 202d set in its interior. It is recognized that similar computations can be done using level sets represented as zonotopes or polyhedra, which represent separate embodiments of the present invention.

These sets can be used to ensure safety in several ways, and two such methods are described as part of the disclosure, differing in the way in which the set-points are updated. In the first, the set-point is updated continuously as the solution to an ordinary differential equation. In the second, the set-points are updated discontinuously, forming a piecewise constant reference trajectory for the controlled system to follow. We start by describing the continuous embodiments, then detail the discontinuous embodiments, before giving implementation details.

*Continuous embodiments*

Figure 3A details a block diagram of a safety mechanism where the set-points are updated in a continuous manner. The unsafe set-point time derivative 310a is provided to the safety mechanism and is used in the integration of the differential equations 320a governing the time-evolution of the safe set-point 321a. This differential equation is defined by the dynamic margin 330a, which is computed using the safe invariant sets from 200C and 200D centered at the current safe set-point 321a. In one embodiment related to aerial vehicle control, the controlled vehicle 340a is a quadrotor and its states contain the positions and velocities of the system in three dimensions. In this embodiment, the dynamic margin is computed by comparing the Lyapunov function evaluated in the current state of the vehicle to the level of the associated safe invariant set. The difference between the two constitutes the dynamic margin 330a. In one embodiment of the invention, the dynamic margin is computed as

$$M(\boldsymbol{p}, \boldsymbol{v}, \boldsymbol{r_k}) = V_{\max}^k - V(\boldsymbol{p}, \boldsymbol{v}, \boldsymbol{r_k}),$$

where $V_{\max}^k$ is the level associated with the safe invariant set computed at $\boldsymbol{r_k}$. The differential equation governing the time-evolution of the set-point is:

$$\dot{\boldsymbol{r}}_k = \kappa M(\boldsymbol{p}, \boldsymbol{v}, \boldsymbol{r_k})\dot{\tilde{\boldsymbol{r}}}_k$$

where $\kappa$ is a positive gain. This differential equation can be integrated in time to update the set-point. It is understood that the initial condition of this differential equation is critical to ensuring safety, and that it can be set from on the initial state of the controlled vehicle 340a.

Figure 3B shows segments of the path/motion plan of the vehicle illustrated in one dimension of the flat output space of the controlled vehicle 340a, according to some embodiments of the present disclosure. The motion of the vehicle is parameterized by the sequence of splines as parameterized curves, and wherein the parametrized curves include one or a combination of polynomials, Bezier curves, B-splines, truncated Fourier series, and Legendre polynomials. It is understood that any other representation of the path that is linear in motion parameters can be used in place of these parametrizations. The path includes m segments, wherein each segment is defined with a duration $T_i = \tau_i - \tau_{i-1}$, defined in the end times 331b, 332b, 333b, 334b, 335b. In Figure 3B, a position trajectory (0th derivative) 111f and its first three derivatives: velocity (1st derivative) 112f, acceleration (2nd derivative) 113f and jerk (3rd derivative) are depicted.

In some embodiments, such trajectories are computed by minimizing objective functions expressing the total variation of the position trajectory, indicated by 315b for the first segment of the trajectory. In others, the trajectory is computed by a weighted sum of the total variation of the position and all higher derivatives. In yet others, the trajectory is computed to minimize a cost combining a total variation objective with a cost functional in the forces, torques and other signals present in the closed-loop vehicle control system. In other embodiments, the optimization minimizes the total time $\Sigma_i T_i$. In some embodiments, the optimization objective comprises all or some of these costs, and optimizes the trajectory subject to endpoint constraints 321b, 322b and continuity constraints. It is understood that an optimization of this kind is computed for a vehicle model in an idealized setting and may result in trajectories that are not safe when considering input disturbances and obstacles given a disturbed vehicle model. In the potentially unsafe motion plan depicted in Figure 3B, the velocity set-point trajectory is continuous in time and can be evaluated. In some embodiments, this unsafe position set-point time derivative is used as input to the safety mechanism 301a depicted in Figure 3A.

In yet other embodiments, the set-point time derivative is encoded as a vector field expressed as a function of the positional space herein referred to as a navigation function.

Figure 3C depicts how such a navigation field can be constructed and evaluated to form the unsafe position set-point time derivative that is used as input to the safety mechanism 301a depicted in Figure 3A. Based on the problem geometry 320c, obstacle and boundary functions can be determined 330c. The obstacle and boundary functions associate each point in space with a positive value that increases when moving away from each individual obstacle 111a,112a,113a,114a,115a, and the boundary of the world 101a, respectively. From these functions, obstacle and boundary influence functions are computed 340c. The influence functions 341c associate each point in space with a value that increases when moving toward the obstacle or boundary. From these influence functions, and with knowledge of the goal location provided by the mission information 310c, a diffeomorphism can be computed 350c that associates each point in the world with polyhedral obstacles 320c to a world in which the obstacles are spheres, henceforth referred to as the sphere world.

A diffeomorphism is a structure-preserving mapping between two smooth manifolds of the same type. It is an invertible function that maps one differentiable manifold to another, in this case the original geometry and the sphere world, such that both the function and its inverse are continuously differentiable. Given that such a diffeomorphism 351c exists, and based on the mission information 310c that contains a goal location, a navigation field can be constructed 360c in the sphere world where all trajectories converge to the goal location provided by the mission without intersecting any of the obstacles in the sphere world. The gradient of this navigation field can subsequently be evaluated through the diffeomorphism to produce a vector field in the original geometry. From this navigation vector field, the position set-point time-derivative can be evaluated at any point in space.

The computation of a navigation field is an alternative to the optimization-based trajectory computation in Figure 3C, and similarly produces a positional set-point time derivative that is used as input to the safety mechanism 310a in some embodiments of the invention. Next, we provide additional details on how the obstacle functions and diffeomorphisms are computed.

Figure 3D demonstrates how the obstacle and boundary functions 331c can be computed and subsequently converted into obstacle and boundary influence functions 341c. The obstacles are represented as polyhedral sets 301d, 302d, 301d, 304d, 305d, and the obstacle function computed for obstacle 305d is shown as 301d. It is recognized that this obstacle function can be computed in many ways, for example by numerical optimization in solving a quadratic program (QP) to find the nearest point to the obstacle and taking the Euclidean distance as the obstacle function

$$\beta_i(\boldsymbol{r}) \;=\; \min_{\boldsymbol{q} \in S_i} \|\boldsymbol{q} - \boldsymbol{r}\|.$$

This function is defined in the exterior of any obstacle, and one such function is computed for each obstacle. From these obstacle functions, we can construct a set of obstacle influence functions 330d. It is understood that one way of doing this is as follows

$$\sigma_i(\boldsymbol{r}) \;=\; \frac{\gamma_k(\boldsymbol{r})\bar{\beta}_i(\boldsymbol{r})}{\gamma_k(\boldsymbol{r})\bar{\beta}_i(\boldsymbol{r}) + \theta\beta_i(\boldsymbol{r})},$$

where

$$\bar{\beta}_i(\boldsymbol{r}) \;=\; \prod_{j=0 \; or \; j \neq i}^{M} \beta_j(\boldsymbol{r})$$

$$\gamma_k(\boldsymbol{r}) = \|\boldsymbol{r} - \boldsymbol{r}_G\|^{2k}$$

The obstacle influence function computed for obstacle 305d is shown as 302d.

Similarly, it is recognized that the boundary function 303d for the boundary 310d can be defined in terms of a distance from a point in its interior to the boundary. The boundary function is thus defined only in the interior of the boundary. This function can similarly be converted 331d using the above expressions to a boundary influence function 304d. Using these functions, we next detail how to compute the diffeomorphism, which is henceforth split into two components. The first component is a scaling diffeomorphism, and the second is the mapping from the scaled polyhedral world to the sphere world.

Figure 3E illustrates how the first differmorphisms map points in space from a polyhedral unscaled world to a scaled polyhedral world 320e, here viewed from above, and how this transformed polyhedral word is mapped via the second differomorphism to the sphere world 340e. In the polyhedral worlds, the obstacles 311e, 312e, 313e, 314e, 315e, 331e, 332e, 333e, 334e, 335e are polyhedral obstacles of different size in the scaled and unscaled worlds. These are mapped to spherical obstacles 351e, 352e, 353e, 354e, 355e in the sphere world. The first diffeomorphism is a simple linear scaling, chosen such that the unscaled polyhedral world fits into a unit sphere. This map is defined by

$$h_\alpha(\boldsymbol{r}) = \alpha\boldsymbol{r},$$

For a positive scaling parameter $\alpha$. The second differomorphism is computed based on the obstacle influence functions as follows

$$h_\theta(r) = \left(1 - \sum_{i=0}^{M} \sigma_i(r)\right) r_G + \sum_{i=0}^{M} \sigma_i(r) T_i(r),$$

where

$$T_i(r) = \sqrt{1 + \beta_i(r)} \, \frac{r - w_i}{\|r - w_i\|} \, r_i + w_i,$$

$$T_i(r) = \sqrt{1 - \beta_0(r)} \, \frac{r - w_0}{\|r - w_0\|} \, r_0 + w_0.$$

The parameters $\{(r_i, w_i)\}_{i=0}^{M}$ determine the shape of the obstacles and boundary in the target sphere world. When passing points in the unscaled polyhedral world first through $h_\alpha$ 320e and then through $h_\theta$ 330e, these points are mapped to unique points in the sphere world 350e, as shown in Figure 3E.

Figure 3F shows how a navigation field in the sphere world is mapped to a navigation field in the original scaled polyhedral world using the inverse of the two diffeomorphisms. The navigation function is defined such that all solutions moving in the negative gradient of the field converge to the goal position 301f, while avoiding the spherical obstacles 311f, 312f, 313f, 314f, 315f when moving orthogonality to the level sets 303f in the direction of the negative gradient. It is understood that a suitable navigation field can be computed as

$$\hat{\varphi}(r; r_G) = \frac{\|r - r_G\|^2}{(\|r - r_G\|^{2k} - \prod_{i=0}^{M} \beta_i(r))^{1/k}},$$

When transformed back to the original polyhedral world 320f using a composition of the first diffeomorphism 320e and the second diffeomorphism 330e, the resulting navigation field 332f is such that all solutions moving in the negative gradient of the field converge to the goal position 302f, while avoiding the polyhedral obstacles 331f, 312f, 313f, 314f when moving orthogonality to the level sets 333f in the direction of the negative gradient. Consequently, specifying the goal location in the mission information, and knowing the obstacles, the navigation function of the sphere world and its gradient can be evaluated at any point in the interior of the world boundary, excluding the interior of the obstacles. It is understood that the resulting gradient can be taken as the set-point time derivative used as the unsafe reference to the safety mechanism, with

$$\dot{r} = -\frac{\nabla \varphi(r; r_G)}{\|\nabla \varphi(r; r_G)\|},$$

where

$$\varphi(r; r_G) = (\hat{\varphi} \circ h_\theta \circ h_\alpha)(r; r_G).$$

Figure 3G illustrates how different goal locations are provided to the safety mechanism, here piece-wise constant, and how the set-point trajectory computed by the safety mechanism in the $x$, $y$, and $z$ dimensions, 310g, 311g and 311g, respectively. The actual positions of the quadrotor lags the intended set-point, but that the set-point is modified in such a way that this tracking error never becomes unsafe. The speed of the quadrotor varies depending on how close it is to an obstacle, and it safely traverses the space while satisfying input constraints, despite the original trajectory produced by the navigation field not being safe.

This represents one embodiment of the safety mechanism, but it is understood that the unsafe reference time derivative can be exchanged for other motion plans, such as the optimization-based motion plan used in other embodiments of the invention.

Figure 3H shows a schematic illustrating an embodiment where the disturbed vehicle model is controlled subject to constraints formulated as a non-linear optimization program and solved in a receding horizon framework, also known as model predictive control. The optimization problem is formed such that a safe setpoint trajectory *r(t)* 312h is computed in order to modify an original unsafe positional setpoint trajectory $\bar{r}$(t) 311h such that the position ***p***(*t*) 313h of the disturbed vehicle model resides in a safe invariant set at all times. In this embodiment, the safe invariant sets can be enforced as nonlinear constraints along each point of the prediction horizon. In this case, it is understood that solving the nonlinear optimization problem entails that the disturbed vehicle model resides in a safe invariant set at all times. In this exemplar, a constraint associated with the maximum thrust of an aerial vehicle 331h and a maximum tilt of the aerial vehicle 340h are shown to reside within their bounds at all times.

*Discontinuous embodiments*

Another embodiment of the invention is to update the set-point trajectory in a discontinuous manner, where the ordinary differential equation used to integrate the position set-point is replaced by a sequence of constant set-points and logic to switch between the set-points.

Figure 4A discloses an embodiment where a discrete solution path 410a is provided as a sequence of position set-points, whereupon the position set-point is updated 420a while controlling the vehicle 440a based on checking an error margin 430a, similar to the dynamic margin in Figure 3A. To compute the error margin which dictates when it is safe to switch set-points, the system requires knowledge of the set-point 421a and the states of the system 441a. In one embodiment, the controlled vehicle is a quadrotor, and the states of the system 441a comprise its position and velocity. In this embodiment, the set-points are three-dimensional points in space. In other embodiments, the set-points 421a are two or one-dimensional points in space, or discrete configurations in a higher-dimensional configuration manifold.

Next, we detail how safety can be ensured when switching the set-point 420a using the robust invariant sets 230c and safe invariant set 212d computed in Figure 2A and 2C, respectively. We then disclose how the solution path 410a can be computed and describe this in terms of a graph $\mathcal{G}$ containing a set of vertices $\mathcal{V} = \{\mathcal{V}_i\}_{i=1}^{L}$ and a set of edges $\varepsilon \subseteq \mathcal{V} \times \mathcal{V}$ connecting some of the vertices. Each vertex in the graph is associated with a set-point in space, $r_k$, a robust invariant set 230c to which all safe motions converge given the disturbed vehicle model, and a safe invariant set 212d that contains the robust invariant set. The nature of safe invariant set 212d is that all solutions initialized in its interior remains safe for all future times, and eventually converge to the robust invariant set 230c.

Figure 4B explains how the graph is constructed in the discrete embodiment and the error margin used when switching set-points. A sequence of set-points is computed from the initial vertex 401b to the terminal vertex 403b, as provided by the mission information and the initial location of the system. The intermediary vertex 402b is a candidate in this solution path. It is understood that, if it exists, we have previously computed a robust invariant set 411b and a safe invariant set associated with this set-point in space given the geometry of the world, the disturbed vehicle model, and the position set-point associated with the vertex. Then, if the robust invariant set 411b associated with the vertex $\mathcal{V}_k$ 402b is contained in the safe invariant set 112b of another vertex $\mathcal{V}_{k+1}$ 404b, then any trajectory started outside the robust invariant set 411b of the vertex $\mathcal{V}_k$ 402b will, if it remains safe, converge the robust invariant set 411b if the controlled vehicle system is tracking its associated set-point. If so, the system will eventually converge to the interior of the safe invariant set 112b of another vertex $\mathcal{V}_{k+1}$ 404b, at which point it is safe to switch set-points.

A robust invariant set contained in the interior of the safe invariant set 112b of another vertex thus implies that a transition between the two vertices will be possible in that direction and can be used to define a directed edge in the graph. The construction of this graph will be explained shortly, and with it a solution path connecting the initial vertex 401b and the terminal vertex 403b can be computed.

Furthermore, if the controlled vehicle is steered toward a set-point associated with the intermediary vertex 402a, then as soon as it enters the safe invariant set 112b of the next vertex 404a in the path, it will be safe to switch the set-points. The distance between the current state of the vehicle and the safe invariant set of the next vertex in the path is referred to as the error margin 430a and dictates how the discrete set-points are updated in 420a. We start by describing how the graph can be constructed and searched, before detailing the switching logic and computation of the error margin.

Figure 4C details how the graph is constructed and searched according to one embodiment of the present disclosure. A set of candidate set-points 411c are generated in the space that the vehicle is to operate in 410c. It is understood that this can be done using a lattice-based construction generating a set of candidate set-points uniformly in space, as discussed in relation to Figure 4D, or by sampling candidate set-points randomly in space. In some embodiments, regions close to obstacles are given a higher likelihood of containing a set-point if the sampling is not uniform. The set of candidate set points $\{r_l\}_{l=1}^{L}$ are then used to compute 420c robust invariant sets 230c and safe invariant sets 212d as described previously in relation to Figures 2A, 2C, and 2D. The sets are then used to compute 450c a large vertex set $\{\mathcal{V}_i\}_{i=1}^{L}$ 460c containing $\left\{\left(r_l, V_{\min}^l, V_{\max}^l\right)\right\}_{l=1}^{L}$. For each pair $(\mathcal{V}_i, \mathcal{V}_j)$ of candidate vertices in the vertex set $\{\mathcal{V}_i\}_{i=1}^{L}$, it is checked if the robust invariant set associated with $\mathcal{V}_i$ is contained in the safe invariant set of vertex $\mathcal{V}_j$.

If this is true, a cost is evaluated 450c and associated with an edge between $\mathcal{V}_i$ and $\mathcal{V}_j$ that is added to the graph. This procedure is repeated until all possible pairs of vertices have been considered.

It is understood that the cost associated with the edges of the graph can be evaluated in many ways. In some embodiments, it is taken as a function of the positions of the set-points associated with the two vertices of the edge. This function can for example be a norm of the difference between the set-points. In another embodiment, the cost is computed as the shortest largest distance between the boundary of the robust invariant set of the vertex $\mathcal{V}_i$ and the safe invariant set of the vertex $\mathcal{V}_j$. In yet other embodiments, the cost is taken to be a function expression of the worst-case tracking errors and control effort necessary for the disturbed system to go from the robust invariant set of the vertex $\mathcal{V}_i$ to the next robust invariant set of the vertex $\mathcal{V}_j$. In yet other embodiments, the cost is associated with expected sensing quality in the region of space containing the safe invariant set of the vertex $\mathcal{V}_i$, the vertex $\mathcal{V}_j$, or both. In other embodiments, the cost is set equal in all the edges. Finally, it is understood that the cost can also be expressed using any combination of the above-mentioned methods.

Once the graph has been computed, a graph-search algorithm is used to compute 460c the optimal path connecting the starting vertex 401b with the terminal vertex 403b given the chosen cost. It is understood that many different graph-search methods can be used for this purpose, such as the Dijkstra or A-star algorithms. It is also recognized that the cost to go in the A-star algorithm can be computed in several ways, and that it can be adapted based on the cost used when constructing the edges of the graph. Once the graph-search method has computed a path 460c, this path 470c is provided as input to the safety mechanism 410a.

Figure 4D shows a lattice-based sampling of the candidate set-points in space. A large number of set-points are sampled and associated with the candidate vertices. Candidate set-points 410d, 402d, are sampled in space 403d and the edges between the vertices are determined when construction the graph based on the relationship between the robust invariant sets 230c and safe invariant sets 212d.

Figure 4E illustrates an implementation of the safety mechanism when the set-points are updated to produce a piece-wise constant and safe reference trajectory. The states of the controlled system are received 420e along with the discrete solution path 410e computed as in Figure 4C. The Lyapunov function associated with the robust and safe invariant sets is evaluated in the current next set-point along the path and compared to the level associated with the safe invariant set at the next set-point in the path 430e. If the error is less than the safety limit, the set-point is updated 431e, 432e. The index of the current vertex in the solution path is returned to the computation of the error margin at the next time step 433e. Finally, the updated set-point is updated 450e and sent to the controlled system 460e.

It is understood that this method of switching ensures that the controlled vehicle always remains in a safe invariant set, thus ensuring safety, and that the controlled system will reach the robust invariant set associated with the terminal vertex in finite time, of there exists a path from the initial to the terminal vertex in the graph.

Figure 4F illustrates one embodiment of the discontinuous safety mechanism, in which an aerial vehicle is initialized with a state in the safe invariant set associated with the initial vertex 406f in the outer corridor 402f and tasked with navigating to the robust invariant set associated with the terminal vertex 407f in the inner room 403f while avoiding the obstacles 401f shown in gray. The two-dimensional projections of the safe and robust invariant sets are shown in 404f and 405f, respectively. The resulting motions from several hundreds of different initial conditions and disturbances are shown with the black lines 408f which avoid the obstacles and reach the robust invariant set associated with the terminal vertex 407f. This is one exemplar of how the discontinuous safety mechanism can be employed for challenging indoor aerial navigation tasks with missions specifying a target location in space.

Figure 4G illustrates how the Lyapunov function defined with a set-point associated to vertices in the optimal path of vertices remains below the levels characterizing associated safe invariant set 402g. The size of the safe invariant sets differs depending on how close the set-point is to the obstacles in the world, and the difference between the safe level and the Lyapunov function is always positive, indicating that the trajectory is safe. Many switches are done 401g, one for each vertex in the solution path of vertices, and the controlled vehicle converges to the safe invariant set of the terminal vertex, as indicated by the Lyapunov function 402g being below the level associated with the robust positive invariant sets 404g.

*Implementation examples*

Figure 5A shows an embodiment where a planner is implemented on a computing server 510a in which all computations are done. The server transmits updated set-points 540a to the client 520a, in this case the vehicle or robot, which tracks the updated set-points and transmits data 550a on its own state and in some embodiments also the environment back to the server. In some embodiments, all communication is done once prior to starting the mission, and in other embodiments, the set-points 540a are computed and refined continuously as additional information is gathered on the disturbance and the environment. This information may be gathered by the vehicle itself, or by any third-party sensor 531a, 532a, 533a. This sensor may be a physical sensor, such as a LiDAR measuring wind speeds, or a non-physical sensor, such as meteorological forecasts of wind speeds or ocean currents, depending on the vehicle considered.

Figure 5B shows yet another embodiment of the planner implemented on a computing server 510b in which all planning computations are done. The communication is the same as in Figure 5A, where 541b, 542b, 543b contain either the unsafe motion plan, the mission information, or the continuously updated modified set-points for each vehicle. In contrast to the previous embodiment, the vehicles 521b, 522b, 523b now contain sensory equipment whereby disturbances and environment information can be measured. As such, the communication to the planner 551b, 552b, 553b now contains additional measurements. In this embodiment, there is no need for any additional external sensing, but some embodiments combine external sensors 531a, 532a, 533a with onboard sensing 521b, 522b, 523b. In other embodiments, the planner is run physically on the vehicle as a component of its larger control system.

Figure 6 is a schematic illustrating a computing device 600a for implementing the methods and systems/controllers of the present disclosure. The computing device 600a includes a power source 601a, a processor 603a, a memory 605a, a storage device 607a, all connected to a bus 609a. Further, a high-speed interface 611a, a low-speed interface 613a, high-speed expansion ports 615a and low speed connection ports 617a, can be connected to the bus 609a. In addition, a low-speed expansion port 619a is in connection with the bus 609a. Further, an input interface 621a can be connected via bus 609a to an external receiver 623a and an output interface 625a. A receiver 627a can be connected to an external transmitter 629a and a transmitter 631a via the bus 609a. Also connected to the bus 609a can be an external memory 633a, external sensors 635a, machine(s) 637a, and an environment 639a. Further, one or more external input/output devices 541 can be connected to the bus 609a. A network interface controller (NIC) 643a can be adapted to connect through the bus 609a to a network 645a, wherein data or other data, among other things, can be rendered on a third-party display device, third party imaging device, and/or third-party printing device outside of the computing device 600a.

The memory 605a can store instructions that are executable by the computing device 600a and any data that can be utilized by the methods and systems of the present disclosure. The memory 605a can include random access memory (RAM), read only memory (ROM), flash memory, or any other suitable memory systems. The memory 605a can be a volatile memory unit or units, and/or a non-volatile memory unit or units. The memory 605a may also be another form of computer-readable medium, such as a magnetic or optical disk.

The storage device 607a can be adapted to store supplementary data and/or software modules used by the computer device 600a. The storage device 607a can include a hard drive, an optical drive, a thumb-drive, an array of drives, or any combinations thereof. Further, the storage device 607a can contain a computer-readable medium, such as a hard disk device, an optical disk device, or a tape device, a flash memory or other similar solid-state memory device, or an array of devices, including devices in a storage area network or other configurations. Instructions can be stored in an information carrier. The instructions, when executed by one or more processing devices (for example, the processor 603a), perform one or more methods, such as those described above.

The computing device 600a can be linked through the bus 609a, optionally, to a display interface or user Interface (HMI) 647a adapted to connect the computing device 600a to a display device 649a and a keyboard 651a, wherein the display device 649a can include a computer monitor, camera, television, projector, or mobile device, among others.

The high-speed interface 611a manages bandwidth-intensive operations for the computing device 600a, while the low-speed interface 613a manages lower bandwidth-intensive operations. Such an allocation of functions is only an example. In some implementations, the high-speed interface 611a can be coupled to the memory 605a, the user interface (HMI) 648a, and to the keyboard 651a and the display 649a (e.g., through a graphics processor or accelerator), and to the high-speed expansion ports 615a, which may accept various expansion cards via the bus 609a.

In an implementation, the low-speed interface 613a is coupled to the storage device 607a and the low-speed expansion ports 617a, via the bus 609a. The low-speed expansion ports 517, which may include various communication ports (e.g., USB, Bluetooth, Ethernet, wireless Ethernet) may be coupled to the one or more input/output devices 641a. The computing device 600a may be connected to a server 653a and a rack server 655a. The computing device 600a may be implemented in several different forms. For example, the computing device 600a may be implemented as part of the rack server 655a.

The description provides exemplary embodiments only and is not intended to limit the scope, applicability, or configuration of the disclosure. Rather, the following description of the exemplary embodiments will provide those skilled in the art with an enabling description for implementing one or more exemplary embodiments. Contemplated are various changes that may be made in the function and arrangement of elements without departing from the spirit and scope of the subject matter disclosed as set forth in the appended claims. Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail to avoid obscuring the embodiments. Further, like reference numbers and designations in the various drawings indicated like elements.

Also, individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, at least in part, either manually or automatically. Manual or automatic implementations may be executed, or at least assisted, using machines, hardware, software, firmware, middleware, microcode, hardware description languages, or any combination thereof. When implemented in software, firmware, middleware or microcode, the program code or code segments to perform the necessary tasks may be stored in a machine-readable medium. A processor(s) may perform the necessary tasks.

Further, embodiments of the present disclosure and the functional operations described in this specification can be implemented in digital electronic circuitry, in tangibly embodied computer software or firmware, in computer hardware, including the structures disclosed in this specification and their structural equivalents, or in combinations of one or more of them. Further, some embodiments of the present disclosure can be implemented as one or more computer programs, i.e., one or more modules of computer program instructions encoded on a tangible non-transitory program carrier for execution by, or to control the operation of, data processing apparatus. Further still, program instructions can be encoded on an artificially generated propagated signal, e.g., a machine-generated electrical, optical, or electromagnetic signal, which is generated to encode information for transmission to suitable receiver apparatus for execution by a data processing apparatus. The computer storage medium can be a machine-readable storage device, a machine-readable storage substrate, a random or serial access memory device, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment.

A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network.

Computers suitable for the execution of a computer program include, by way of example, can be based on general or special purpose microprocessors or both, and any other central processing unit. Generally, a central processing unit will receive instructions and data from a read only memory or a random-access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

To provide for interaction with a user, embodiments of the subject matter described in this specification can be implemented on a computer having a display device, e.g., an LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The system's components can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship with each other.

**Claims**

1. A method (100E) for controlling the movement of a vehicle in a constrained environment subject to disturbances and modelling errors, wherein the method uses a processor and a memory having instructions implementing the method stored thereon, wherein the instructions, when executed by the processor, performs the steps of the method, comprising:

    collecting a feedback signal indicative of a state of the vehicle and a trajectory for controlling the vehicle according to a task (110e);
    determining a robust invariant set centered on the trajectory for the operation of the vehicle in an unconstrained environment using a disturbed vehicle model, wherein the disturbed vehicle model includes either one or more of the polytopic uncertainty in the parameters, bounded input disturbances, attitude tracking control errors, and input constraints (140e);
    inflating the robust invariant set equally in all directions until a termination condition defined by the constraint environment is met to produce a safe invariant set (160e); and
    controlling the operation of the vehicle according to the task while maintaining the state of the vehicle within the safe invariant set (180e).

2. The method (100E) of claim 1, wherein the robust invariant set is the smallest set of a predetermined shape **characterized by** a Lyapunov function and a level of the Lyapunov function for the vehicle corresponding to the disturbed vehicle model.

3. The method (100E) of claim 2, wherein the robust invariant set is inflated by one or a combination of changing a level of the Lyapunov function and scaling parameters of the Lyapunov function.

4. The method (100E) of claim 2, wherein the predetermined shape of the robust invariant set is ellipsoidal or polyhedral.

5. The method (100E) of claim 1, wherein the operation of the vehicle is done by closed-loop feedback control, wherein the robust invariant set is determined to have an ellipsoidal volume with geometry computed in the parameters of the disturbed vehicle model.

6. The method (100E) of claim 5, wherein the vehicle is controlled by a controller with unknown gains, and wherein the robust invariant set is determined for a set of possible controllers that describe how the dynamical system toward the setpoint, wherein the set of possible controllers describe the gains of the disturbed vehicle model and are defined with polytopic uncertainty, and preferably, the ellipsoidal volume is determined by solving optimization problem that includes bounds on the maximum rotation angle of the attitude tracking error in the closed-loop vehicle control system, bounded input disturbances of the disturbed vehicle model, and the polytopic uncertainties in the gains of the disturbed vehicle model.

7. The method (100E) of claim 1, wherein the control is performed using a model predictive controller over a prediction horizon, such that the safe invariant set is determined for each time step, along each point of the prediction horizon or both.

8. The method (300A) of claim 1, further comprising:
    collecting a differentiable trajectory defining the operation of the dynamical system to perform the task, wherein the differentiable trajectory is not guaranteed to be safe or feasible (310a);

determining a differential equation having a solution defining a setpoint trajectory, using the safe invariant set, unsafe differentiable trajectory, and the state of the vehicle;
integrate the differential equation for each time step of the control to produce the setpoint trajectory (320a); and
controlling the vehicle according to the computed setpoint trajectory (340a).

9. The method (300A) of claim 8, wherein the differentiable trajectory is determined using an optimization method that minimizes a cost function including a total variation of the movement of the vehicle and its derivatives subject to constraints of define by the constrained environment.

10. The method (300A) of claim 8, wherein the differentiable trajectory is determined using a navigation field computed in simplified world geometry having obstacles of the constraint environment represented as spheres, wherein the simplified world geometry is mapped to the obstacles in the constrained environment using one or more diffeomorphisms (360c), and
preferably, the diffeomorphisms are partitioned into a first diffeomorphism that scales the world geometry, and a second diffeomorphism that maps the scaled geometry to the simplified world geometry using obstacle and boundary influence functions computed as solutions to an optimization problem (350c).

11. The method (400C) of claim 1, further comprising:

computing a set of setpoints (410c) and a set of safe invariant sets centered on the corresponding set points (420c); and
constructing a graph having vertices defined by the set of setpoints (450c); and
determining connectivity of the graph based on the safe invariant sets, such that a connection is established if the robust invariant set of one node is contained in the safe invariant set of another (450c);
finding a solution path of vertices connecting an initial vertex in the graph to a terminal vertex in the graph corresponding to the specified task (460c); and
controlling the vehicle according to the solution on the graph by switching the setpoints based on the Lyapunov function and its size in relation to the safe invariant sets of the nodes along the vertices in the solution path (470c).

12. The method (400C) of claim 11, wherein the solution path on the graph is a time-agnostic sequence of setpoints, wherein the controlling uses a switching logic connecting the time-agnostic sequence of setpoints in time based on the errors induced by the disturbances acting on the vehicle.

13. The method (400E) of claim 12, wherein the switching logic is defined by checking if the Lyapunov function (430e) associated with the robust invariant set of the next node in the solution path is smaller than the safe invariant set of the same node in the path, and
preferably, the motion trajectory is computed in simulation and used to control the vehicle along a set-point trajectory defined in time.

14. A feedback controller (600A) for controlling a movement of a vehicle in a constrained environment subject to disturbances and modelling errors, comprising: at least one processor (603a); and a memory (605a) having instructions stored thereon that, when executed by the at least one processor (603a), cause the feedback controller (600A) to:

collect a feedback signal indicative of a state of the vehicle and a trajectory for controlling the vehicle according to a task (110e);
determine a robust invariant set centered on the trajectory for the operation of the vehicle in an unconstrained environment using a disturbed vehicle model, wherein the disturbed vehicle model includes either one or more of the polytopic uncertainty in the parameters, bounded input disturbances, attitude tracking control errors, and input constraints (140e);
inflate the robust invariant set equally in all directions until a termination condition defined by the constraint environment is met to produce a safe invariant set (160e); and
control the operation of the vehicle according to the task while maintaining the state of the vehicle within the safe invariant set (180e).

15. A non-transitory computer readable storage medium embodied thereon a program executable by a processor for performing a method, the method comprising:

collecting a feedback signal indicative of a state of the vehicle and a trajectory for controlling the vehicle according to a task (110e);
determining a robust invariant set centered on the trajectory for the operation of the vehicle in an unconstrained environment using a disturbed vehicle model, wherein the disturbed vehicle model includes either one or more of the polytopic uncertainty in the parameters, bounded input disturbances, attitude tracking control errors, and input constraints (140e);
inflating the robust invariant set equally in all directions until a termination condition defined by the constraint environment is met to produce a safe invariant set (160e); and
controlling the operation of the vehicle according to the task while maintaining the state of the vehicle within the safe invariant set (180e).

**Patentansprüche**

1. Verfahren (100E) zum Steuern der Bewegung eines Fahrzeugs in einer eingeschränkten Umgebung, die Störungen und Modellierungsfehlern unterworfen ist, wobei das Verfahren einen Prozessor und einen Speicher nutzt, in dem Anweisungen zum Implementieren des Verfahrens gespeichert sind, wobei die Anweisungen, wenn sie von dem Prozessor ausgeführt werden, die Schritte des Verfahrens durchführen, umfassen:

Beziehen eines Rückkopplungssignals, das einen Zustand des Fahrzeugs und eine Trajektorie zum Steuern des Fahrzeugs gemäß einer Task (110e) anzeigt;
Bestimmen einer robusten invarianten Menge, die auf der Trajektorie für den Betrieb des Fahrzeugs in einer uneingeschränkten Umgebung zentriert ist, unter Verwendung eines gestörten Fahrzeugmodells, wobei das gestörte Fahrzeugmodell eines oder mehrere von einer polytopischen Unsicherheit in den Parametern, begrenzte Eingabestörungen, Lageverfolgungssteuerungsfehler und Eingabebeschränkungen (140e) enthält;
Inflatieren der robusten invarianten Menge gleichmäßig in alle Richtungen, bis eine durch die Beschränkungsumgebung definierte Abbruchbedingung erfüllt ist, um eine sichere invariante Menge (160e) zu erzeugen; und
Steuern des Betriebs des Fahrzeugs gemäß der Task, und dabei Aufrechterhalten des Zustands des Fahrzeugs innerhalb der sicheren invarianten Menge (180e).

2. Verfahren (100E) nach Anspruch 1, wobei die robuste invariante Menge die kleinste Menge einer vorbestimmten Form ist, die durch eine Lyapunov-Funktion und ein Niveau der Lyapunov-Funktion für das Fahrzeug entsprechend dem gestörten Fahrzeugmodell gekennzeichnet ist.

3. Verfahren (100E) nach Anspruch 2, wobei die robuste invariante Menge durch eines oder eine Kombination aus Ändern eines Niveaus der Lyapunov-Funktion und Skalieren von Parametern der Lyapunov-Funktion inflatiert wird.

4. Verfahren (100E) nach Anspruch 2, wobei die vorbestimmte Form der robusten invarianten Menge ellipsoidisch oder polyedrisch ist.

5. Verfahren (100E) nach Anspruch 1, wobei der Betrieb des Fahrzeugs durch eine Geschlossener-Regelkreis-Rückkopplungssteuerung erfolgt, wobei für die robuste invariante Menge bestimmt wird, ein ellipsoides Volumen mit einer Geometrie aufzuweisen, die in den Parametern des gestörten Fahrzeugmodells berechnet wird.

6. Verfahren (100E) nach Anspruch 5, wobei das Fahrzeug durch eine Steuereinheit mit unbekannten Gains gesteuert wird, und wobei die robuste invariante Menge für eine Menge möglicher Steuereinheiten bestimmt wird, die beschreiben, wie sich das dynamische System dem Sollwert nähert, wobei die Menge möglicher Steuereinheiten die Gains des gestörten Fahrzeugmodells beschreibt, und welche mit polytopischer Unsicherheit definiert sind, und vorzugsweise das ellipsoidische Volumen durch Lösen eines Optimierungsproblems bestimmt wird, das Grenzen für den maximalen Drehwinkel des Lageverfolgungsfehlers in dem Geschlossener-Regelkreis-Fahrzeugsteuersystem, begrenzte Eingabestörungen des gestörten Fahrzeugmodells und die polytopischen Unsicherheiten in den Gains des gestörten Fahrzeugmodells enthält.

7. Verfahren (100E) nach Anspruch 1, wobei die Steuerung unter Verwendung einer modellprädiktiven Steuereinheit über einen Vorhersagehorizont durchgeführt wird, so dass die sichere invariante Menge für jeden Zeitschritt, entlang jedes Punktes des Vorhersagehorizonts oder beides bestimmt wird.

**8.** Verfahren (300A) nach Anspruch 1, ferner umfassend:

Beziehen einer differenzierbaren Trajektorie, die den Betrieb des dynamischen Systems zur Durchführung der Task definiert, wobei die differenzierbare Trajektorie nicht garantiert sicher oder durchführbar ist (310a);
Bestimmen einer Differentialgleichung mit einer Lösung, die eine Solltrajektorie definiert, unter Verwendung der sicheren invarianten Menge, der unsicheren differenzierbaren Trajektorie und des Zustands des Fahrzeugs;
Integrieren der Differentialgleichung für jeden Zeitschritt der Steuerung, um die Solltrajektorie (320a) zu erzeugen; und
Steuern des Fahrzeugs gemäß der berechneten Solltrajektorie (340a).

**9.** Verfahren (300A) nach Anspruch 8, wobei die differenzierbare Trajektorie unter Verwendung eines Optimierungsverfahrens bestimmt wird, das eine Kostenfunktion minimiert, die eine Gesamtvarianz der Bewegung des Fahrzeugs und ihre Ableitungen vorbehaltlich der durch die eingeschränkte Umgebung definierten Beschränkungen einschließt.

**10.** Verfahren (300A) nach Anspruch 8, wobei die differenzierbare Trajektorie unter Verwendung eines Navigationsfeldes bestimmt wird, das in einer vereinfachten Weltgeometrie mit Hindernissen der eingeschränkten Umgebung, die als Sphären dargestellt sind, berechnet wird, wobei die vereinfachte Weltgeometrie auf die Hindernisse in der eingeschränkten Umgebung unter Verwendung eines oder mehrerer Diffeomorphismen (360c) abgebildet wird, und vorzugsweise die Diffeomorphismen in einen ersten Diffeomorphismus, der die Weltgeometrie skaliert, und einen zweiten Diffeomorphismus, der die skalierte Geometrie auf die vereinfachte Weltgeometrie abbildet, unter Verwendung von Hindernis- und Begrenzungseinflussfunktionen, die als Lösungen für ein Optimierungsproblem (350c) berechnet werden, unterteilt werden.

**11.** Verfahren (400C) nach Anspruch 1, ferner umfassend:

Berechnen einer Menge von Sollwerten (410c) und einer Menge von sicheren invarianten Mengen, die auf die entsprechenden Sollwerte zentriert sind (420c); und
Konstruieren eines Graphen mit Scheitelpunkten, die durch die Menge von Sollwerten (450c) definiert sind; und
Bestimmen einer Konnektivität des Graphen auf der Grundlage der sicheren invarianten Mengen, so dass eine Konnexion hergestellt wird, falls die robuste invariante Menge eines Knotens in der sicheren invarianten Menge eines anderen (450c) enthalten ist;
Finden eines Lösungspfades von Scheitelpunkten, die einen Anfangsscheitelpunkt in dem Graphen mit einem Endscheitelpunkt in dem Graphen konnektieren, welcher der spezifizierten Task entspricht (460c); und
Steuern des Fahrzeugs gemäß der Lösung auf dem Graphen durch Wechseln der Sollwerte auf der Grundlage der Lyapunov-Funktion und ihrer Größe im Verhältnis zu den sicheren invarianten Mengen der Knoten entlang der Scheitelpunkte im Lösungspfad (470c).

**12.** Verfahren (400C) nach Anspruch 11, wobei der Lösungspfad auf dem Graphen eine zeitagnostische Folge von Sollwerten ist, wobei die Steuerung eine Umschaltlogik nutzt, welche die zeitagnostische Folge von Sollwerten in der Zeit basierend auf den Fehlern, die durch die auf das Fahrzeug wirkenden Störungen induziert werden, konnektiert.

**13.** Verfahren (400E) nach Anspruch 12, wobei die Umschaltlogik definiert wird, indem geprüft wird, ob die Lyapunov-Funktion (430e), die der robusten invarianten Menge des nächsten Knotens im Lösungspfad zugeordnet ist, kleiner ist als die sichere invariante Menge desselben Knotens im Pfad, und
vorzugsweise die Bewegungstrajektorie in Simulation berechnet wird, und zur Steuerung des Fahrzeugs entlang einer zeitlich definierten Solltrajektorie genutzt wird.

**14.** Rückkopplungssteuereinheit (600A) zum Steuern einer Bewegung eines Fahrzeugs in einer eingeschränkten Umgebung, die Störungen und Modellierungsfehlern unterworfen ist, umfassend: mindestens einen Prozessor (603a); und einen Speicher (605a) mit darauf gespeicherten Anweisungen, die, wenn sie von dem mindestens einen Prozessor (603a) ausgeführt werden, die Rückkopplungssteuerung (600A) dazu veranlassen:

ein Rückkopplungssignal, das einen Zustand des Fahrzeugs und eine Trajektorie zur Steuerung des Fahrzeugs gemäß einer Task (110e) angibt, zu beziehen;
eine robuste invariante Menge, die auf der Trajektorie für den Betrieb des Fahrzeugs in einer uneingeschränkten Umgebung zentriert ist, unter Verwendung eines gestörten Fahrzeugmodells zu bestimmen, wobei das gestörte Fahrzeugmodell eines oder mehrere von der polytopischen Unsicherheit in den Parametern, begrenzten Eingabestörungen, Lageverfolgungssteuerungsfehler und Eingabebeschränkungen (140e) enthält;

die robuste invariante Menge gleichmäßig in alle Richtungen zu inflatieren, bis eine durch die Beschränkungsumgebung definierte Abbruchbedingung erfüllt ist, um eine sichere invariante Menge (160e) zu erzeugen; und den Betrieb des Fahrzeugs gemäß der Task zu steuern und dabei Aufrechterhalten des Zustands des Fahrzeugs innerhalb der sicheren invarianten Menge (180e).

15. Nicht-transitorisches, computerlesbares Speichermedium, auf dem ein von einem Prozessor ausführbares Programm zur Durchführung eines Verfahrens verkörpert ist, wobei das Verfahren umfasst:

Beziehen eines Rückkopplungssignals, das einen Zustand des Fahrzeugs und eine Trajektorie zum Steuern des Fahrzeugs gemäß einer Task (110e) anzeigt;
Bestimmen einer robusten invarianten Menge, die auf der Trajektorie für den Betrieb des Fahrzeugs in einer uneingeschränkten Umgebung zentriert ist, unter Verwendung eines gestörten Fahrzeugmodells, wobei das gestörte Fahrzeugmodell eines oder mehrere von einer polytopischen Unsicherheit in den Parametern, begrenzte Eingabestörungen, Lageverfolgungssteuerungsfehler und Eingabebeschränkungen (140e) enthält;
Inflatieren der robusten invarianten Menge gleichmäßig in alle Richtungen, bis eine durch die Beschränkungsumgebung definierte Abbruchbedingung erfüllt ist, um eine sichere invariante Menge (160e) zu erzeugen; und
Steuern des Betriebs des Fahrzeugs gemäß der Task, und dabei Aufrechterhalten des Zustands des Fahrzeugs innerhalb der sicheren invarianten Menge (180e).

## Revendications

1. Procédé (100E) pour commander le déplacement d'un véhicule dans un environnement contraint soumis à des perturbations et à des erreurs de modélisation, dans lequel le procédé utilise un processeur et une mémoire sur laquelle sont stockées des instructions mettant en œuvre le procédé, dans lequel les instructions, lorsqu'elles sont exécutées par le processeur, effectuent les étapes du procédé consistant à :

collecter un signal de rétroaction indicatif d'un état du véhicule et d'une trajectoire pour commander le véhicule selon une tâche (110e) ;
déterminer un ensemble invariant robuste centré sur la trajectoire pour le fonctionnement du véhicule dans un environnement non contraint en utilisant un modèle de véhicule perturbé, dans lequel le modèle de véhicule perturbé inclut une ou plusieurs des incertitudes polytopiques dans les paramètres, des perturbations d'entrée délimitées, des erreurs de commande de suivi d'attitude et des contraintes d'entrée (140e) ;
gonfler l'ensemble invariant robuste de manière égale dans toutes les directions jusqu'à ce qu'une condition de fin définie par l'environnement contraint soit satisfaite pour produire un ensemble invariant sûr (160e) ; et
commander le fonctionnement du véhicule selon la tâche tout en maintenant l'état du véhicule dans l'ensemble invariant sûr (180e).

2. Procédé (100E) selon la revendication 1, dans lequel l'ensemble invariant robuste est le plus petit ensemble d'une forme prédéterminée **caractérisé par** une fonction de Lyapunov et un niveau de la fonction de Lyapunov pour le véhicule correspondant au modèle de véhicule perturbé.

3. Procédé (100E) selon la revendication 2, dans lequel l'ensemble invariant robuste est gonflé par une ou une combinaison de changement d'un niveau de la fonction de Lyapunov et d'une mise à l'échelle de paramètres de la fonction de Lyapunov.

4. Procédé (100E) selon la revendication 2, dans lequel la forme prédéterminée de l'ensemble invariant robuste est ellipsoïdale ou polyédrique.

5. Procédé (100E) selon la revendication 1, dans lequel le fonctionnement du véhicule est effectué par une commande de rétroaction en boucle fermée, dans lequel l'ensemble invariant robuste est déterminé pour avoir un volume ellipsoïdal avec une géométrie calculée dans les paramètres du modèle de véhicule perturbé.

6. Procédé (100E) selon la revendication 5, dans lequel le véhicule est commandé par un dispositif de commande avec des gains inconnus, et dans lequel l'ensemble invariable robuste est déterminé pour un ensemble de dispositifs de commande possibles qui décrivent la manière du système dynamique vers le point de consigne, dans lequel l'ensemble de dispositifs de commande possibles décrit les gains du modèle de véhicule perturbé et sont définis avec une incertitude polytopique et, de préférence, le volume ellipsoïdal est déterminé en résolvant un problème d'optimisation qui inclut des limites sur l'angle de rotation maximum de l'erreur de suivi d'attitude dans le système de commande de véhicule en boucle fermée, des perturbations d'entrée limitées du modèle de véhicule perturbé, et les incertitudes polytopiques dans les gains du modèle de véhicule perturbé.

7. Procédé (100E) selon la revendication 1, dans lequel la commande est effectuée en utilisant un dispositif de commande prédictif de modèle sur un horizon de prédiction, de telle sorte que l'ensemble invariant sûr soit déterminé pour chaque étape temporelle, le long de chaque point de l'horizon de prédiction, ou les deux.

8. Procédé (300a) selon la revendication 1, comprenant en outre les étapes consistant à :

   collecter une trajectoire différentiable définissant le fonctionnement du système dynamique pour exécuter la tâche, dans lequel la trajectoire différentiable n'est pas garantie sûre ou réalisable (310a) ;
   déterminer une équation différentielle présentant une solution définissant une trajectoire de consigne, en utilisant l'ensemble invariant sûr, une trajectoire différentiable dangereuse et l'état du véhicule ;
   intégrer l'équation différentielle pour chaque étape temporelle de la commande pour produire la trajectoire de consigne (320a) ; et
   commander le véhicule selon la trajectoire de consigne calculée (340a).

9. Procédé (300A) selon la revendication 8, dans lequel la trajectoire différentiable est déterminée en utilisant un procédé d'optimisation qui minimise une fonction de coût incluant une variation totale du déplacement du véhicule et de ses dérivées soumise à des contraintes de définition par l'environnement contraint.

10. Procédé (300A) selon la revendication 8, dans lequel la trajectoire différentiable est déterminée en utilisant un champ de navigation calculé dans une géométrie de monde simplifiée présentant des obstacles de l'environnement contraint représentés sous forme de sphères, dans lequel la géométrie de monde simplifiée est cartographiée par rapport aux obstacles dans l'environnement contraint en utilisant un ou plusieurs difféomorphismes (360c), et de préférence, les difféomorphismes sont divisés en un premier difféomorphisme qui met à l'échelle la géométrie de monde, et un second difféomorphisme qui cartographie la géométrie mise à l'échelle par rapport à la géométrie de monde simplifiée en utilisant des fonctions d'influence d'obstacle et de limite calculées en tant que solutions à un problème d'optimisation (350c).

11. Procédé (400C) selon la revendication 1, comprenant en outre les étapes consistant à :

   calculer un ensemble de points de consigne (410c) et un ensemble d'ensembles invariants sûrs centrés sur les points de consigne correspondants (420c) ; et
   construire un graphique présentant des sommets définis par l'ensemble de points de consigne (450c) ; et
   déterminer la connectivité du graphique sur la base des ensembles invariants sûrs, de telle sorte qu'une connexion soit établie si l'ensemble invariant robuste d'un nœud est contenu dans l'ensemble d'invariants sûrs d'un autre (450c) ;
   trouver un trajet de solution de sommets reliant un sommet initial dans le graphique à un sommet terminal dans le graphique correspondant à la tâche spécifiée (460c) ; et
   commander le véhicule selon la solution sur le graphique en commutant les points de consigne sur la base de la fonction de Lyapunov et de sa taille par rapport aux ensembles invariants sûrs des nœuds le long des sommets dans le trajet de solution (470c).

12. Procédé (400C) selon la revendication 11, dans lequel le trajet de solution sur le graphique est une séquence de points de consigne indépendante du temps, dans lequel la commande utilise une logique de commutation connectant la séquence de points de consigne indépendante du temps dans le temps sur la base des erreurs induites par les perturbations agissant sur le véhicule.

13. Procédé (400E) selon la revendication 12, dans lequel la logique de commutation est définie en vérifiant si la fonction de Lyapunov (430e) associée à l'ensemble invariant robuste du nœud suivant dans le trajet de solution est plus petite que l'ensemble invariant sûr du même nœud dans le trajet, et de préférence, la trajectoire de mouvement est calculée en simulation et utilisée pour commander le véhicule le long d'une trajectoire de consigne définie dans le temps.

14. Dispositif de commande de rétroaction (600A) pour commander un déplacement d'un véhicule dans un environnement contraint soumis à des perturbations et à des erreurs de modélisation, comprenant : au moins un processeur (603a) ; et une mémoire (605a) sur laquelle sont stockées des instructions qui, lorsqu'elles sont exécutées par le au moins un processeur (603a), amènent le dispositif de commande de rétroaction (600A) à :

recueillir un signal de rétroaction indicatif d'un état du véhicule et d'une trajectoire pour commander le véhicule selon une tâche (110e) ;

déterminer un ensemble invariant robuste centré sur la trajectoire pour le fonctionnement du véhicule dans un environnement non contraint en utilisant un modèle de véhicule perturbé, dans lequel le modèle de véhicule perturbé inclut une ou plusieurs des incertitudes polytopiques dans les paramètres, des perturbations d'entrée délimitées, des erreurs de commande de suivi d'attitude et des contraintes d'entrée (140e) ;

gonfler l'ensemble invariant robuste de manière égale dans toutes les directions jusqu'à ce qu'une condition de fin définie par l'environnement contraint soit satisfaite pour produire un ensemble invariant sûr (160e) ; et

commander le fonctionnement du véhicule selon la tâche tout en maintenant l'état du véhicule dans l'ensemble invariant sûr (180e).

15. Support de stockage non transitoire lisible par ordinateur sur lequel réside un programme exécutable par un processeur pour mettre en œuvre un procédé, le procédé comprenant les étapes consistant à :

collecter un signal de rétroaction indicatif d'un état du véhicule et d'une trajectoire pour commander le véhicule selon une tâche (110e) ;

déterminer un ensemble invariant robuste centré sur la trajectoire pour le fonctionnement du véhicule dans un environnement non contraint en utilisant un modèle de véhicule perturbé, dans lequel le modèle de véhicule perturbé inclut une ou plusieurs des incertitudes polytopiques dans les paramètres, des perturbations d'entrée délimitées, des erreurs de commande de suivi d'attitude et des contraintes d'entrée (140e) ;

gonfler l'ensemble invariant robuste de manière égale dans toutes les directions jusqu'à ce qu'une condition de fin définie par l'environnement contraint soit satisfaite pour produire un ensemble invariant sûr (160e) ; et

commander le fonctionnement du véhicule selon la tâche tout en maintenant l'état du véhicule dans l'ensemble invariant sûr (180e).

FIG.1A

FIG.1B

FIG.1C

# FIG.1D

100D

```
┌─────────────────────────┐            ┌─────────────────────────┐
│   Unsafe Planner 120d    │ ◀ ─ ─ ─ ─ │      Mission 110d       │
└─────────────────────────┘            └─────────────────────────┘
             │                                       │
             ▼                                       │
┌─────────────────────────┐                          │
│ Set-point rₖ or Trajectory 121d │                  │
└─────────────────────────┘                          │
             │                                       │
             ▼                                       │
┌─────────────────────────┐                          │
│  Safety Mechanism 130d   │ ◀ ─ ─ ─ ─ ─ ─ ─ ─ ─ ─ ─ ┘
└─────────────────────────┘
             │
             ▼
┌─────────────────────────┐
│ Modified Set-point rₖ 131d │
└─────────────────────────┘
             │
             ▼
┌─────────────────────────┐
│  Controlled Vehicle 140d │
│                          │
│         (drone)          │
└─────────────────────────┘
```

Unsafe Planner 120d

Mission 110d

Set-point $r_k$ or Trajectory 121d

Safety Mechanism 130d

Modified Set-point $r_k$ 131d

Controlled Vehicle 140d

EP 4 652 509 B1

FIG.1E

100E

| Unsafe Planner 120e | ◄------ | Mission 110e |

Set-point $r_k$ or
Trajectory 121e

Disturbed Vehicle
Model 130e

Compute Robust Sets
140e

Robust Set
Set $O_{min}^k$ 141e

Geometry 150e

Compute Safe Sets 160e

Safe Inflated Set
$O_{min}^k$ 161e

Evaluate New Set-point
170e

Modified Set-point $\bar{r}_k$
171e

Control Aerial Vehicle
System Along $r_k$ 180e

EP 4 652 509 B1

FIG.1F

# FIG.2A

200A

Disturbance Measurements 220a

Compute Disturbance Controllers 230a

Possible Controllers or Data 210a

Set $\{K^i\}_{i=1}^{N}$, $\Delta_{max}$ , $F_{max}$ 231a

Formulate Matrix Inequalities 250a

Set-point 240a

Minimize $c^T x$ Over $F(x) \geq 0$ 251a

Solve Matrix Inequalities 260a

Lyapunov Matrix $P$ and $\lambda$ 261a

Compute and Output the $O_{min}^k$ 270a

EP 4 652 509 B1

32

FIG.2B

EP 4 652 509 B1

# FIG.2C

200C

Disturbance Measurements 210c

Determine set of Obstacles 220c

Set of Obstacles $\{S_i\}_{i=1}^{M}$ 221c

Robust invariant set $O_{min}$ 230c

Compute level set 240c

Levels $\{I'^i\}_{i=1}$ 241c

Robust Invariant Set $O_{min}^{k}$ 230c

Compute level set for constraints 260c

Model Parameters and $\{K^i\}_{i=1}^{N}$ 250c

Level $I'_0$ 261c

$V_{max}^{k} = \min_{i \in [0,M]} I'_i$ 270c

Compute and Output the Set $O_{max}^{k}$ 280c

FIG.2D

EP 4 652 509 B1

FIG.3A

Unsafe Set-point Derivative $r_k^-$ 310a

Integrate Updated Set-point 320a

Set-point $r_k$ 321a

Controlled Vehicle 340a

Compute Dynamic Margin 330a

States 341a

300A

EP 4 652 509 B1

FIG.3B

EP 4 652 509 B1

FIG.3C

300C

Determine Obstacle Functions
330c

$J_i(r)$
331c

Determine Obstacle Influence
340c

$a_i(r)$
341c

Determine Diffeomorphism
350c

$H(r)$
351c

Determine Navigation Field
360c

$P(r, r_G)$
361c

Determine Set-point
Derivative $\dot{r}_k$ 370c

Geometry 320c

Mission 310c

38

# FIG.3D

300D

Obstacle Function $/\!/_5\,(r)$

314d
315d
312d
311d
310d

$S_4$
$S_5$
$S_0$
$S_2$
$S_1$
$S_3$

301d    313d

330d

Obstacle Function $a_5\,(r)$

302d

Boundary Function $/\!/_0\,(r)$

303d

331d

Boundary Function $a_0\,(r)$

304d

EP 4 652 509 B1

FIG.3E

# FIG.3F

FIG.3G

FIG.3H

# FIG.4A

$400A$

**Discrete Solution Path** $\{(r_k, V_{min}^k, V_{max}^k)\}_{k=1}^k$ 410a

**Compute Updated Set-Point** 420a

**Set-point** $r_k$ 421a

**Controlled Vehicle** 440a

**Check Error Margin** 430a

**States** 441a

EP 4 652 509 B1

EP 4 652 509 B1

FIG.4C

400C

Find Candidate Set-Points
410c

Set of Points $\{r_l\}_{l=1}^{L}$ 421c

Compute Robust/Safe Sets
at Points 420c

Sets $\{O_{min}^{l}, O_{max}^{l}\}_{i=1}^{L}$ 421c

Form Vertex Set
$\{(r_l, V_{min}^{l}, V_{max}^{l})\}_{l=1}^{L}$ 450c

Form Vertex Set
$\{(r_l, V_{min}, V_{max})\}_{l=1}$ 450c

Has Checked
Every $(V_i, V_j)$?

Yes → Compute Optimal Path By
Graph Search 460c

No

Evaluate Cost $J(V_i, V_j)$, Add
Edge $(V_i, V_j)$ in G 450c

← Yes — Is $O_{min}^{j} c\ O_{max}^{i}$ ?

Output Path
$\{(r_l, V_{min}^{k}, V_{max}^{k})\}_{k=1}^{K}$ 470c

EP 4 652 509 B1

FIG.4D

400D

403d
402d
401d

FIG.4E

400E

EP 4 652 509 B1

Receive States *x(t)* 420e

Discrete Solution Path
$\{(r_k, V^k_{min}, V^k_{max})\}^k_{k=1}$ 410e

Evaluate Lyapunov
Function At $r_{k+1}$ 430e

Index K
433e

$V(x(t), r_{k+1})$ is
Less than $V^{k+1}_{max}$ ?
431e

NO

YES

If K < K, K = K+1 432e

Update Setpoint
$\overline{r}_k = r_k$ 450e

Update Setpoint
$\overline{r}(t)$ 460e

48

# FIG.4F

# FIG.4G

EP 4 652 509 B1

FIG.5A

FIG.5B

500B

Server (Planner) 510a

541b

553b

542b

543b

551b

552b

Client (Device) 520a

Client (Vehicle) 522b

Client (Vehicle) 523b

# FIG.6

600A

External Sensors 635a

Machine 637a

Environment 639a

External Memory 633a

One Or More Input/ Output Devices 641a

External Receiver 623a

External Transmitter 629a

Power Source 601a

Input Interface 621a

Receiver 627a

Processor 603a

Output Interface 625a

Transmitter 631a

609a

Memory 605a

Storage Device 607a

NIC 643a

Network 645a

High Speed Interface 611a

High Speed Interface 615a

Low Speed Interface 613a

Low Speed Interface 617a

User Interface (HMI) 647a

Low Speed Connection Ports 619a

Keyboard 651a

Display 649a

Server 619a

Rack Server 655a

EP 4 652 509 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Robust Motion Planning for Uncertain Systems With Disturbances Using the Invariant-Set Motion Planner. **DANIELSON CLAUS et al.** IEEE TRANSACTIONS ON AUTOMATIC CONTROL. IEEE, 09 July 2020, vol. 65, 4456-4463